(19) Europäisches Patentamt
European Patent Office
Office européen des brevets

(11) EP 3 565 856 B1

(12) **EUROPEAN PATENT SPECIFICATION**

(45) Date of publication and mention of the grant of the patent:
**17.08.2022 Bulletin 2022/33**

(21) Application number: **18704587.7**

(22) Date of filing: **02.01.2018**

(51) International Patent Classification (IPC):
***C08L 71/12*** *(2006.01)* ***H01B 3/42*** *(2006.01)*
***H01B 3/44*** *(2006.01)* ***C08L 53/02*** *(2006.01)*

(52) Cooperative Patent Classification (CPC):
(C-Sets available)
**H01B 3/427; C08L 53/025; C08L 71/12; H01B 3/441; H01B 3/442** (Cont.)

(86) International application number:
**PCT/IB2018/050028**

(87) International publication number:
**WO 2018/127803 (12.07.2018 Gazette 2018/28)**

(54) **FLEXIBLE, UV-RESISTANT POLY(PHENYLENE ETHER) COMPOSITION, AND INSULATED CONDUCTOR AND JACKETED CABLE COMPRISING SAME**

FLEXIBLE, UV-BESTÄNDIGE POLY(PHENYLENETHER)ZUSAMMENSETZUNG UND ISOLIERTER LEITER UND UMMANTELTES KABEL DAMIT

COMPOSITION DE POLYPHÉNYLÈNE-ÉTHER, SOUPLE, RÉSISTANT AUX UV, CONDUCTEUR ISOLÉ ET CÂBLE GAINÉ LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.01.2017 US 201762442498 P**

(43) Date of publication of application:
**13.11.2019 Bulletin 2019/46**

(73) Proprietor: **SHPP Global Technologies B.V.**
**4612 PX Bergen op Zoom (NL)**

(72) Inventors:
- **PENG, Hui**
  **Shanghai 201319 (CN)**
- **SHAN, Wei**
  **Shanghai 201319 (CN)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**EP-A1- 2 677 552**
**WO-A1-2017/158446**
**WO-A2-2013/121363**
**US-A1- 2015 252 214**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 565 856 B1

(52) Cooperative Patent Classification (CPC): (Cont.)

C-Sets
**C08L 53/025, C08K 5/523, C08L 71/12;**
**C08L 71/12, C08K 5/523, C08L 53/025**

**Description**

BACKGROUND OF THE INVENTION

In the consumer electronics market, insulated conductors and jacketed cables are widely used to charge devices, and to transfer data to and from devices. Devices are often sold in a variety of colors, with matching colored insulated conductors and/or jacketed cables. WO2013/121363 and US2015/252214 disclose cable jacketing compositions comprising poly(phenylene ether) and an organophosphate ester flame retardant. There has recently been a desire to reduce the use of halogenated materials in insulation and jacketing compositions. Insulating and jacketing materials containing poly(phenylene ether)s can be halogen-free and are known to exhibit many desirable properties, including flexibility, heat resistance, flame retardancy, and resistance to color change on exposure to ultraviolet light. However, it has been observed that ultraviolet light resistance can require high levels of ultraviolet absorbing agents, which in turn can create migration of the ultraviolet absorbing agents to the surface of the insulation or jacking material, which is associated with a color shift under ambient storage conditions. There is therefore a desire to reduce the content of ultraviolet absorbing agents while preserving resistance to ultraviolet light.

BRIEF SUMMARY OF EMBODIMENTS OF THE INVENTION

One embodiment is a composition, comprising: 15 to 40 parts by weight of a poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants.

Another embodiment is an insulated conductor, comprising: a conductor; and an insulating covering disposed over the conductor; wherein the insulating covering comprises a composition comprising 15 to 40 parts by weight of a poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants.

Another embodiment is a jacketed cable, comprising: a conductor; an insulating covering surrounding the conductor; and a jacket surrounding the insulating covering; wherein the jacket comprises a composition comprising 15 to 40 parts by weight of a poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants.

These and other embodiments are described in detail below.

BRIEF DESCRIPTION OF THE DRAWINGS

Figure 1 is a side view of an insulated conductor.
Figure 2 is a cross-sectional view of an insulated conductor.
Figure 3 is a side view of a jacketed cable comprising two insulated conductors and having a flat cross-section.
Figure 4 is a cross-sectional view of the -shaped jacketed cable comprising two insulated conductors and having a flat cross-section.
Figure 5 is a side view of a jacketed cable comprising two insulated conductors and having a circular cross-section.
Figure 6 is a cross-sectional view of the jacketed cable comprising two insulated conductors and having a circular cross-section.
Figure 7 is a side view of a jacketed cable comprising three insulated conductors and having a flat cross-section.
Figure 8 is a cross-sectional view of the jacketed cable comprising three insulated conductors and having a flat cross-section.
Figure 9 is a side view of a jacketed cable comprising three insulated conductors and having a circular cross-section.
Figure 10 is a cross-sectional view of the jacketed cable comprising three insulated conductors and having a circular cross-section.

DETAILED DESCRIPTION OF THE INVENTION

The present inventors have determined that in a flexible, poly(phenylene ether)-based composition, the use of a solid organophosphate flame retardant can significantly increase the efficacy of ultraviolet absorbing agents in the composition, thereby allowing the ultraviolet absorbing agents to be employed in reduced amounts, and reducing or eliminating the problem of color shifts associated ultraviolet absorbing agent migration under ambient conditions.

Thus, one embodiment is a composition, comprising: 15 to 40 parts by weight of a poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants.

The composition includes a poly(phenylene ether). Poly(phenylene ether)s include those comprising repeating structural units having the formula

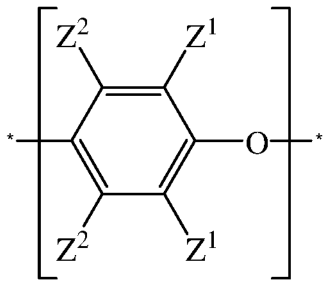

wherein each occurrence of $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxyl, or C2-C12 halohydrocarbyloxyl wherein at least two carbon atoms separate the halogen and oxygen atoms; and each occurrence of $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxyl, or C2-C12 halohydrocarbyloxyl wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, $Z^1$ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure

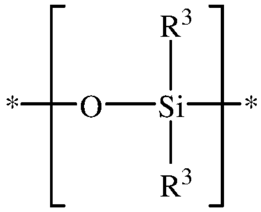

wherein each occurrence of $R^3$ is independently hydrogen, $C_1$-$C_{12}$ hydrocarbyl or $C_1$-$C_{12}$ halohydrocarbyl; and two terminal units having the structure

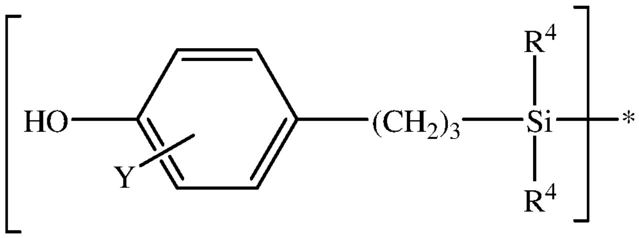

wherein Y is hydrogen, $C_1$-$C_{12}$ hydrocarbyl, $C_1$-$C_{12}$ hydrocarbyloxyl, or halogen, and wherein each occurrence of $R^4$ is independently hydrogen, $C_1$-$C_{12}$ hydrocarbyl or $C_1$-$C_{12}$ halohydrocarbyl. In a very specific embodiment, each occurrence of $R^3$ and $R^4$ is methyl, and Y is methoxyl.

In some embodiments, the monohydric phenol comprises 2,6-dimethylphenol, and the hydroxyaryl-terminated polysiloxane has the structure

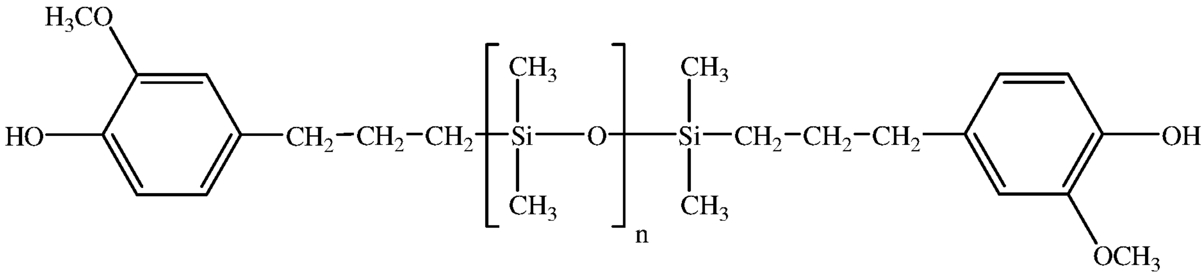

wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, or 0.35 to 0.5 deciliter per gram, or 0.4 to 0.5 deciliter per gram.

In some embodiments, the poly(phenylene ether) comprises a homopolymer or copolymer of monomers selected from the group consisting of 2,6-dimethylphenol, 2,3,6-trimethylphenol, and combinations thereof. In some embodiments, the poly(phenylene ether) comprises a poly(phenylene ether)-polysiloxane block copolymer. In these embodiments, the poly(phenylene ether)-polysiloxane block copolymer can, for example, contribute 0.05 to 2 weight percent, or 0.1 to 1 weight percent, or 0.2 to 0.8 weight percent, of siloxane groups to the composition as a whole.

Suitable poly(phenylene ether) homopolymers are commercially available as, for example, PPO™ 640 and 646 from SABIC. A poly(phenylene ether)-polysiloxane block copolymer is commercially available as PPO™ 843 Resin from SABIC.

In some embodiments, the poly(phenylene ether) comprises a maleic anhydride-functionalized poly(phenylene ether). The maleic anhydride-functionalized poly(phenylene ether) can be prepared by reacting 0.1 to 10 parts by weight maleic anhydride with 100 parts by weight unfunctionalized poly(phenylene ether) in the presence or absence of solvent. The maleic anhydride-functionalized poly(phenylene ether) can be used as the sole poly(phenylene ether), or it can be used in combination with unfunctionalized poly(phenylene ether). In a subset of the latter embodiments, the poly(phenylene ether) comprises 1 to 30 parts by weight of maleic anhydride-functionalized poly(phenylene ether) per 100 parts by weight total of maleic anhydride-functionalized poly(phenylene ether) and unfunctionalized poly(phenylene ether). Within this range, the maleic anhydride-functionalized poly(phenylene ether) amount can be 2 to 20 parts by weight, or 4 to 15 parts by weight.

The composition comprises 15 to 40 parts by weight of a poly(phenylene ether), based on 100 parts by weight total of polymers and flame retardants. Within the range of 15 to 40 parts by weight, the poly(phenylene ether) amount can be 15 to 35 parts by weight, or 18 to 30 parts by weight.

In addition to the poly(phenylene ether), the composition comprises a hydrogenated block copolymer of an alkenyl aromatic monomer and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In some embodiments, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, or 30 to 35 weight percent, all based on the weight of the low poly(alkenyl aromatic) content hydrogenated block copolymer. In other embodiments, the hydrogenated block copolymer is a high poly(alkenyl aromatic content) hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In some embodiments, the hydrogenated block copolymer has a weight average molecular weight of 40,000 to 400,000 grams per mole. The number average molecular weight and the weight average molecular weight can be determined by gel permeation chromatography and based on comparison to polystyrene standards. In some embodiments, the hydrogenated block copolymer has a weight average molecular weight of 200,000 to 400,000 grams per mole, or 220,000 to 350,000 grams per mole. In other embodiments, the hydrogenated block copolymer has a weight average molecular weight of 40,000 to 200,000 grams per mole, or 40,000 to 180,000 grams per mole, or 40,000 to 150,000 grams per mole.

The alkenyl aromatic monomer used to prepare the hydrogenated block copolymer can have the structure

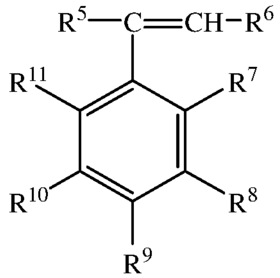

wherein $R^5$ and $R^6$ each independently represent a hydrogen atom, a $C_1$-$C_8$ alkyl group, or a $C_2$-$C_8$ alkenyl group; $R^7$ and $R^{11}$ each independently represent a hydrogen atom, a $C_1$-$C_8$ alkyl group, a chlorine atom, or a bromine atom; and $R^8$, $R^9$, and $R^{10}$ each independently represent a hydrogen atom, a $C_1$-$C_8$ alkyl group, or a $C_2$-$C_8$ alkenyl group, or $R^8$ and $R^9$ are taken together with the central aromatic ring to form a naphthyl group, or $R^9$ and $R^{10}$ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In some embodiments, the alkenyl aromatic monomer is styrene.

The conjugated diene used to prepare the hydrogenated block copolymer can be a $C_4$-$C_{20}$ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, or at least 70 percent. The arrangement of blocks (A) and (B) includes

a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the hydrogenated block copolymer is a diblock copolymer, a triblock copolymer, or a combination thereof.

In some embodiments, the hydrogenated block copolymer comprises a polystyrene-poly(ethylene-butylene-styrene)-polystyrene tapered block copolymer. For brevity, this component is referred to as the "tapered block copolymer". Tapered block copolymers are also known as controlled distribution block copolymers. In some embodiments, the tapered block copolymer has a polystyrene content of 30 to 70 weight percent, or 35 to 65 weight percent, based on the weight of the tapered block copolymer. In some embodiments, the tapered block copolymer has a melt flow rate of 0 to 10 grams per 10 minutes, measured at 260 °C and 5 kilogram load according to ASTM D1238-13. Tapered block copolymers are commercially available as, for example, KRATON™ A1535 and A1536 Resins from Kraton Performance Polymers.

The hydrogenated block copolymer can consist of polystyrene-poly(ethylenebutylene)-polystyrene triblock copolymer. Alternatively, the hydrogenated block copolymer can comprise polystyrene-poly(ethylene-butylene)-polystyrene triblock copolymer and tapered block copolymer. For example, the 5 to 40 parts by weight of the hydrogenated block copolymer can comprise 3 to 12 parts by weight of polystyrene-poly(ethylene-butylene)-polystyrene triblock copolymer and 22 to 35 parts by weight of the tapered block copolymer. Alternatively, the hydrogenated block copolymer can consist of the tapered block copolymer. In some embodiments, the hydrogenated block copolymer comprises 70 to 100 weight percent of a polystyrene-poly(ethylene-butylene-styrene)-polystyrene tapered block copolymer, based on the weight of the hydrogenated block copolymer.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In some embodiments, the hydrogenated block copolymer includes the residue of one or more acid functionalizing agents, such as maleic anhydride.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON™ G1701 (having about 37 weight percent polystyrene) and G1702 (having about 28 weight percent polystyrene); the polystyrene-poly(ethylene-butylene)-polystyrene triblock copolymers available from Kraton Performance Polymers Inc.as KRATON™ G1641 (having about 33 weight percent polystyrene), G1650 (having about 30 weight percent polystyrene), G1651 (having about 33 weight percent polystyrene), and G1654 (having about 31 weight percent polystyrene); and the polystyrene-poly(ethylene-ethylene/propylene)-polystyrene triblock copolymers available from Kuraray as SEPTON™ S4044, S4055, S4077, and S4099. Additional commercially available hydrogenated block copolymers include polystyrene-poly(ethylene-butylene)-polystyrene (SEBS) triblock copolymers available from Dynasol as CALPRENE™ H6140 (having about 31 weight percent polystyrene), H6170 (having about 33 weight percent polystyrene), H6171 (having about 33 weight percent polystyrene), and H6174 (having about 33 weight percent polystyrene), and from Kuraray as SEPTON™ 8006 (having about 33 weight percent polystyrene) and 8007 (having about 30 weight percent polystyrene); polystyrene-poly(ethylenebutylene-styrene)-polystyrene tapered block copolymers available from Kraton Performance Polymers as KRATON™ A1535 (having 56.3-60.3 weight percent polystyrene) and A1536 (having 37-44 weight percent polystyrene); polystyrene-poly(ethylene-propylene)-polystyrene (SEPS) copolymers available from Kuraray as SEPTON™ 2006 (having about 35 weight percent polystyrene) and 2007 (having about 30 weight percent polystyrene); and oil-extended compounds of these hydrogenated block copolymers available from Kraton Performance Polymers Inc.as KRATON™ G4609 (containing about 45% mineral oil, and the SEBS having about 33 weight percent polystyrene) and G4610 (containing about 31% mineral oil, and the SEBS having about 33 weight percent polystyrene); and from Asahi as TUFTEC™ H1272 (containing about 36% oil, and the SEBS having about 35 weight percent polystyrene). Mixtures of two of more hydrogenated block copolymers can be used.

The composition comprises the hydrogenated block copolymer in an amount of 20 to 50 parts by weight, based on 100 parts by weight total of polymers and flame retardants. Within this range, the amount of hydrogenated block copolymer can be 25 to 40 parts by weight.

In some embodiments, the hydrogenated block copolymer can comprise 25 to 35 parts by weight of a polystyrene-poly(ethylene-butylene-styrene)-polystyrene tapered block copolymer. Within these embodiments, the polystyrene-poly(ethylene-butylene-styrene)-polystyrene tapered block copolymer can comprise 10 to 20 parts by weight of a first polystyrene-poly(ethylene-butylene-styrene)-polystyrene tapered block copolymer having a polystyrene content of 34 to 48 weight percent, and 10 to 20 parts by weight of a second polystyrene-poly(ethylene-butylene-styrene)-polystyrene tapered block copolymer having a polystyrene content of 50 to 65 weight percent.

In addition to the poly(phenylene ether) and the hydrogenated block copolymer, the composition comprises a flame retardant comprising an organophosphate ester having a melting point of 60 to 150 °C, or 80 to 120 °C. The organophosphate ester can have, for example, structure (1) or (2)

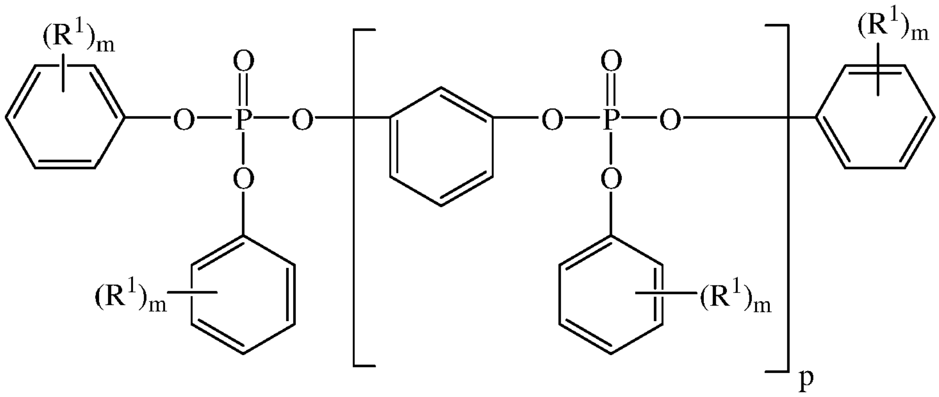

(1)

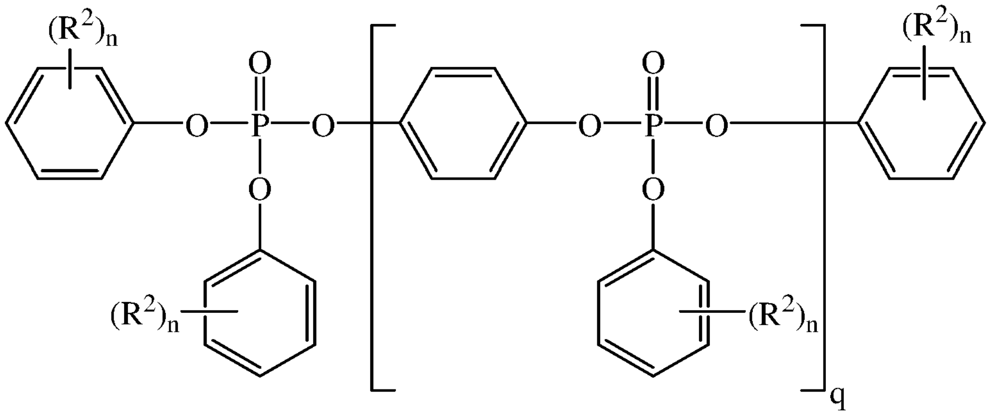

(2)

wherein m is independently at each occurrence 0, 1 or 2, provided that at least one occurrence of m is 1; p is on average 1 to 3; $R^1$ is independently at each occurrence $C_1$-$C_4$ alkyl; n is independently at each occurrence 0, 1 or 2; q is on average 1 to 3; and $R^2$ is independently at each occurrence $C_1$-$C_4$ alkyl. In some embodiments, the organophosphate ester has structure (1), m is 2, p is on average 1 to 2, and $R^1$ is methyl. In other embodiments, the organophosphate ester has structure (2), n is 0, and p is on average 1 to 2.

The organophosphate ester can be a combination of at least two compounds having structure (1), at least two compounds having structure (2), or at least two compounds one having structure (1) and the other having structure (2).

The flame retardant comprises 3 to 15 parts by weight of the organophosphate ester having a melting point of 60 to 150 °C, based on 100 parts by weight total of polymers and flame retardants. Within this range, the organophosphate ester amount can be 4 to 11 parts by weight.

The flame retardant can, optionally, comprise additional components. Suitable additional flame retardants include metal dialkylphosphinates, bis(phenoxy)phosphazenes, melamine-based flame retardants, metal hydroxides, and combinations thereof.

As used herein, the term "metal dialkylphosphinate" refers to a salt comprising at least one metal cation and at least one dialkylphosphinate anion. In some embodiments, the metal dialkylphosphinate has the formula

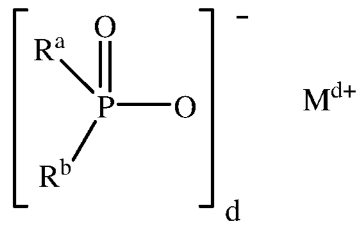

wherein $R^a$ and $R^b$ are each independently $C_1$-$C_6$ alkyl; M is calcium, magnesium, aluminum, or zinc; and d is 2 or 3. Examples of $R^a$ and $R^b$ include methyl, ethyl, n-propyl, isopropyl, n-butyl, tert-butyl, and n-pentyl. In some embodiments, $R^a$ and $R^b$ are ethyl, M is aluminum, and d is 3 (that is, the metal dialkylphosphinate is aluminum tris(diethylphosphinate)).

Bis(phenoxy)phosphazenes can be oligomeric or polymeric, cyclic or linear. In some embodiments, the bis(phenoxy)phosphazene is cyclic and has the structure

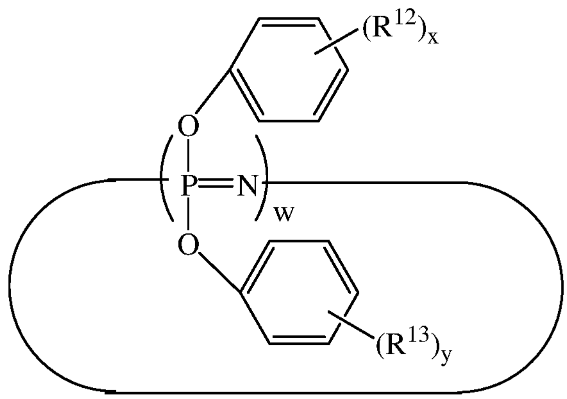

wherein w is an integer of 3 to 25; x and y are each independently 0, 1, 2, 3, 4, or 5; and each occurrence of $R^{12}$ and $R^{13}$ is halogen, $C_1$-$C_{12}$ alkyl, or $C_1$-$C_{12}$ alkoxyl.

In other embodiments, the bis(phenoxy)phosphazene is linear and has the structure

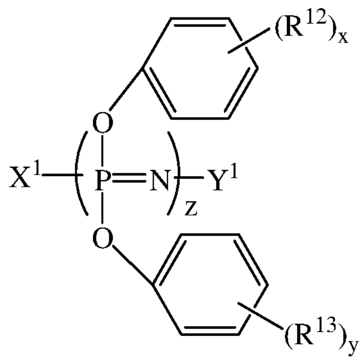

wherein z is an integer from 3 to 10,000; $X^1$ represents a $-N=P(OPh)_3$ group or a $-N=P(O)(OPh)$ group wherein Ph represents a phenyl group; $Y^1$ represents a $-P(OPh)_4$ group or a $-P(O)(OPh)_2$ group; x and y are each independently 0, 1, 2, 3, 4, or 5; and each occurrence of $R^{12}$ and $R^{13}$ is halogen, $C_1$-$C_{12}$ alkyl, or $C_1$-$C_{12}$ alkoxyl.

Nitrogen-containing flame retardants include those comprising a nitrogen-containing heterocyclic base and a phosphate or pyrophosphate or polyphosphate acid. In some embodiments, the nitrogen-containing flame retardant has the formula

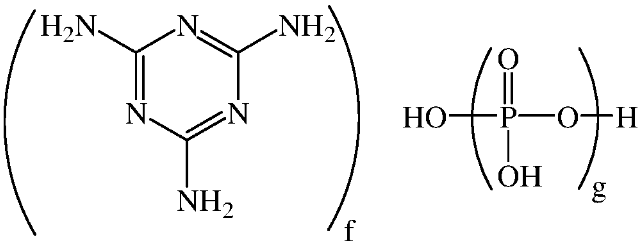

wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In some embodiments, the nitrogen-containing flame retardant is melamine pyrophosphate, melamine polyphosphate, or a mixture thereof. In some embodiments in which the nitrogen-containing flame retardant is melamine polyphosphate, g has an average value of greater than 2 to 10,000, specifically 5 to 1,000, more specifically 10 to 500. In some embodiments in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510 to Jacobson et al. In some embodiments, the nitrogen-containing flame retardant comprises melamine cyanurate.

Suitable metal hydroxides include all those capable of providing fire retardancy, as well as combinations of such metal hydroxides. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardancy. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example, CAS Reg. No. 21041-93-0), and combinations thereof. In some embodiments, the metal hydroxide comprises magnesium hydroxide. In some embodiments the metal hydroxide has an average particle size less than or equal to 10 micrometers and/or a purity greater than or equal to 90 weight percent. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with stearic acid or other fatty acid.

When present, the additional flame retardant can be used in an amount of 1 to 27 parts by weight, based on 100 parts by weight total of polymers and flame retardants. Within this range, the amount of the additional flame retardant can be 5 to 25 parts by weight, or 10 to 25 parts by weight.

The composition comprises all flame retardants in a total amount of 5 to 30 parts by weight, based on 100 parts by weight total of polymers and flame retardants. Within this range, the composition can comprise all flame retardants in a total amount of 12 to 25 parts by weight.

In a very specific embodiment, the flame retardant comprises 3 to 10 parts by weight of the organophosphate ester and further comprises 5 to 12 parts by weight of a metal dialkylphosphinate and 5 to 12 parts by weight of melamine polyphosphate.

In addition to the poly(phenylene ether), the hydrogenated block copolymer, and the flame retardant, the composition comprises an ultraviolet absorbing agent. Suitable ultraviolet absorbing agents include benzophenones (including 2-hydroxybenzophenones and hydroxyphenylbenzophenones), benzotriazoles (including 2-(2'-hydroxyphenyl)benzotriazoles), cinnamates, oxanilides, benzoxazinones, triazines (including 2-(2'-hydroxyphenyl)-1,3,5-triazines), benzoxazinones, and combinations thereof. Additional classes of ultraviolet absorbing agents are described in H. Zweifel, Ed., "Plastics Additive Handbook", 5th Edition, Cincinnati: Hanser Gardner Publications, Inc. (2001), pages 206-238.

Benzophenone-type UV absorbers include those having the structure

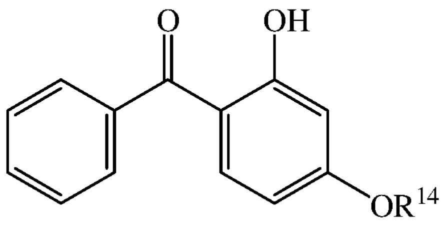

wherein $R^{14}$ is hydrogen or $C_1$-$C_{12}$ alkyl.

Benzotriazole-type UV absorbers include those having the structure

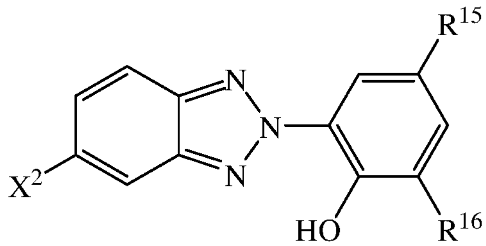

wherein $X^2$ is hydrogen or chloro; $R^{15}$ is $C_1$-$C_{12}$ alkyl; and $R^{16}$ is hydrogen or $C_1$-$C_{12}$ alkyl. A specific illustrative benzotriazole-type UV absorber is 2-(2'-hydroxy-5'-tert-octylphenyl)benzotriazole, CAS Reg. No. 3147-75-9.

Cinnamate-type UV absorbers include those having the structure

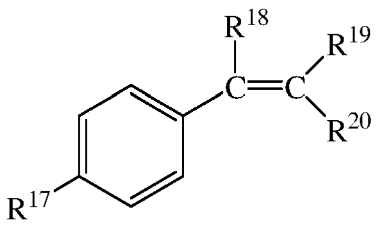

wherein $R^{17}$ is hydrogen or vinyl or $C_1$-$C_6$ alkoxyl (specifically methoxyl); $R^{18}$ is hydrogen or $C_1$-$C_{12}$ hydrocarbyl, specifically methyl or phenyl; and $R^{19}$ and $R^{20}$ are each independently hydrogen, cyano, (-CN) or carboxy($C_1$-$C_{12}$)alkyl.

Oxanilide-type UV absorbers include those having the structure

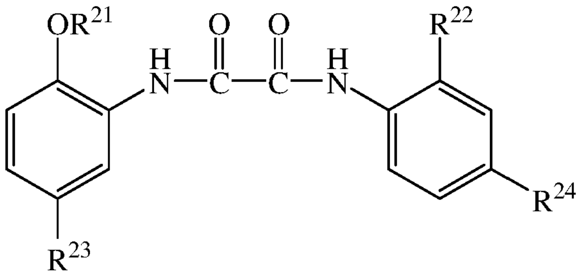

wherein $R^{21}$ and $R^{22}$ are each independently $C_1$-$C_6$ alkyl; and $R^{23}$ and $R^{24}$ are each independently hydrogen or $C_1$-$C_{12}$ alkyl, specifically *tert-butyl.*

Triazine UV absorbers include those having the structure

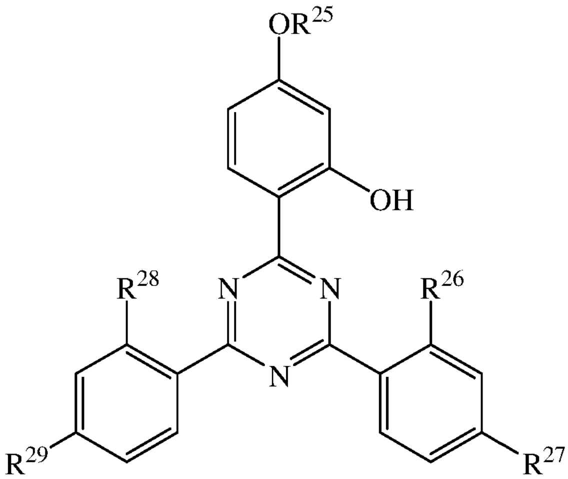

wherein $R^{25}$ is $C_1$-$C_{12}$ alkyl; and $R^{26}$, $R^{27}$, $R^{28}$, and $R^{29}$ are each independently hydrogen or $C_1$-$C_6$ alkyl (specifically methyl) or $C_6$-$C_{12}$ aryl (specifically phenyl).

Benzoxazinone-type UV absorbers include those having the structure

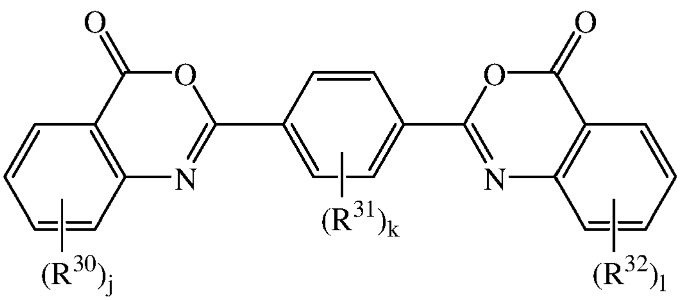

wherein $R^{30}$, $R^{31}$, and $R^{32}$ are independently at each occurrence $C_1$-$C_{12}$ alkyl or $C_1$-$C_{12}$ alkoxyl; and j, k, and 1 are each independently 0, 1, or 2.

In some embodiments, the ultraviolet absorbing agent comprises a 2-(2'-hydroxyphenyl)benzotriazole.

In some embodiments, the ultraviolet absorbing agent comprises a 2-(2'-hydroxyphenyl)-1,3,5-triazine.

The ultraviolet absorbing agent is used in an amount of 0.5 to 5 parts by weight, based on 100 parts by weight total of polymers and flame retardants. Within this range, the ultraviolet absorbing agent amount can be 1 to 3 parts by weight.

The composition can, optionally, comprise 2 to 15 parts by weight of an ethylene homopolymer, a propylene homopolymer, or a combination thereof, based on 100 parts by weight total of polymers and flame retardants. Within this range, the amount of ethylene homopolymer, propylene homopolymer, or combination thereof can be 5 to 15 parts by weight.

The composition can, optionally, comprise a polybutene having a number average molecular weight of 500 to 1500 grams/mole. The polybutene can comprise a polyisobutene. When present, the polybutene can be used in an amount of 2 to 10 parts by weight based on 100 parts by weight total of polymers and flame retardants. Within this range, the polybutene can be used in an amount of 6 to 10 parts by weight.

The composition can, optionally, further comprise one or more additives known in the thermoplastics art. For example, the composition can, optionally, further comprise an additive chosen from stabilizers, mold release agents, lubricants, processing aids, drip retardants, dyes, pigments, antioxidants, anti-static agents, blowing agents, mineral oil, metal deactivators, and combinations thereof. When present, such additives are typically used in a total amount of less than or equal to 15 parts by weight, based on 100 parts by weight total of polymers and flame retardants. Within this limit, the additive amount can be less than or equal to 12 parts by weight. Excluding white pigment, such additives are typically used in a total amount of less than or equal to 5 parts by weight, or less than or equal to 4 parts by weight, or less than or equal to 3 parts by weight, based on 100 parts by weight total of polymers and flame retardants.

The composition can, optionally, minimize or exclude components other than the required components described herein. For example, the composition can comprise less than 1 part by weight, or exclude, homopolystyrenes. As another example, the composition can comprise less than 1 part by weight, or exclude, rubber-modified polystyrenes

(e.g., those comprising 80 to 96 weight percent polystyrene, and 4 to 20 weight percent polybutadiene). As another example, the composition can comprise less than 1 part by weight, or exclude, polyamides. As another example, the composition can comprise less than 1 part by weight, or exclude, polyesters. As another example, the composition can comprise less than 1 part by weight, or exclude, copolymers of monomer comprising ethylene and a $C_3$-$C_{12}$ alpha olefin.

In a very specific embodiment of the composition, the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C; the hydrogenated block copolymer comprises 25 to 35 weight percent of a polystyrene-poly(ethylene-butylene-styrene)-polystyrene tapered block copolymer; the organophosphate ester comprises an organophosphate ester having structure (1)

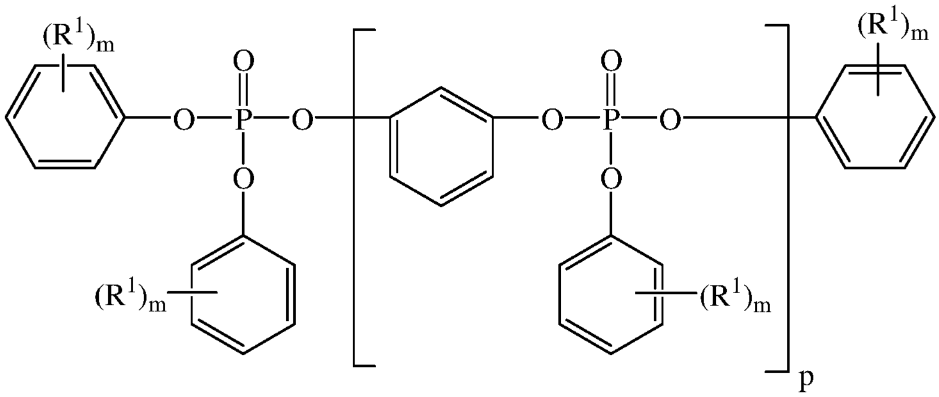

(1)

wherein m is 2, p is on average 1 to 2, and $R^1$ is methyl; an organophosphate ester having structure (2)

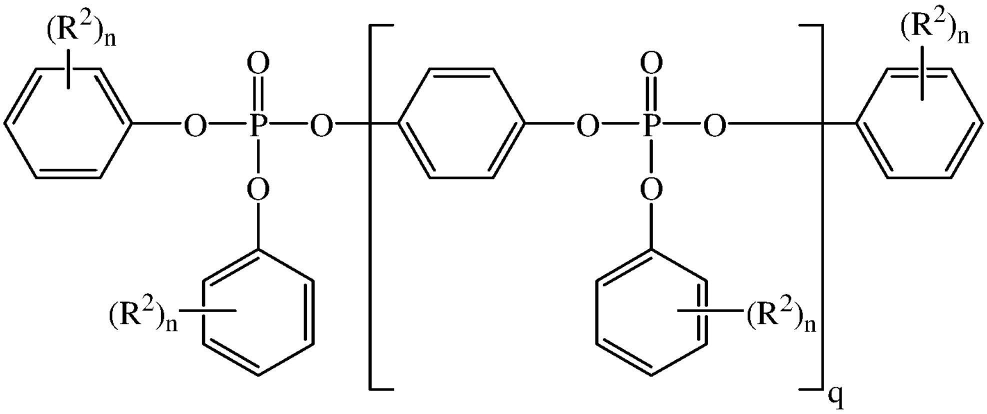

(2)

wherein n is 0, and p is on average 1 to 2; or a combination of the organophosphate ester having structure (1) and the organophosphate ester having structure (2); or a combination of the organophosphate ester having structure (1) and the organophosphate ester having structure (2); the ultraviolet absorbing agent comprises a 2-(2'-hydroxyphenyl)benzotriazole, a 2-(2'-hydroxyphenyl)-1,3,5-triazine, or a combination thereof; the composition comprises 18 to 30 parts by weight of the poly(phenylene ether), 25 to 40 parts by weight of the hydrogenated block copolymer, 3 to 10 parts by weight of the organophosphate ester, and 1 to 3 parts by weight of the ultraviolet absorbing agent; the composition further comprises 5 to 15 parts by weight of a propylene homopolymer, and 6 to 10 parts by weight of a polybutene having a number average molecular weight of 500 to 1500 grams/mole; and the flame retardant further comprises 5 to 12 parts by weight of a metal dialkylphosphinate, and 5 to 12 parts by weight of melamine polyphosphate.

The composition can be prepared by melt-blending or melt-kneading the components of the composition. The melt-blending or melt-kneading can be performed using common equipment such as ribbon blenders, HENSCHEL™ mixers, BANBURY™ mixers, drum tumblers, single-screw extruders, twin-screw extruders, multi-screw extruders, cokneaders, and the like. For example, the present composition can be prepared by melt-blending the components in a twin-screw extruder at a temperature of 230 to 270 °C, specifically 240 to 260 °C.

Another embodiment is an insulated conductor, comprising: a conductor; and an insulating covering disposed over the conductor; wherein the insulating covering comprises a composition comprising 15 to 40 parts by weight of a

poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants. All of the above-described variations of the composition apply as well to the composition as applied to the insulated covering. The working examples below include illustrative conditions for extrusion coating a conductor.

Figure 1 is a side view of an insulated conductor 2 comprising conductor 4 and insulating covering 6 surrounding the conductor. Figure 2 is a cross-sectional view of the same conductor, with parts similarly labeled. The conductor 4 can be an electrical conductor (e.g., copper wire) or an optical conductor (e.g., glass fiber). The conductor can comprise multiple strands, as shown in Figure 1, or a single strand. The insulated conductor can be formed by extrusion coating the conductor with the insulating covering.

In a very specific embodiment of the insulated conductor, the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C; the hydrogenated block copolymer comprises 25 to 35 weight percent of a polystyrenepoly(ethylene-butylene-styrene)-polystyrene tapered block copolymer; the organophosphate ester comprises an organophosphate ester having structure (1)

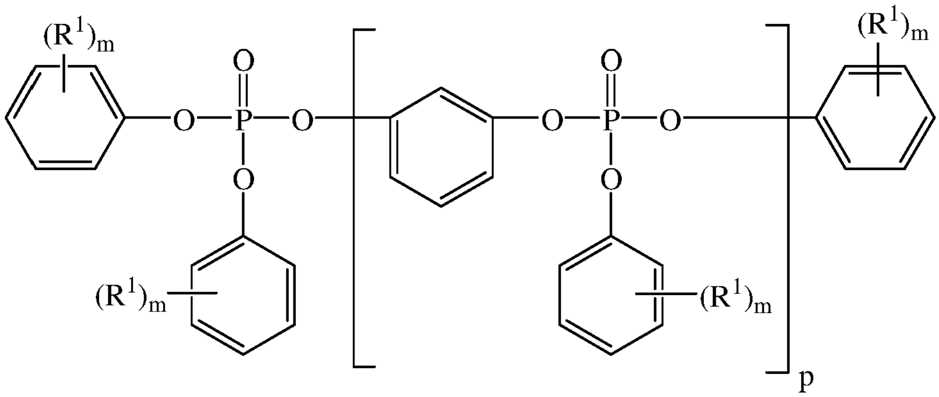

(1)

wherein m is 2, p is on average 1 to 2, and $R^1$ is methyl; or an organophosphate ester having structure (2)

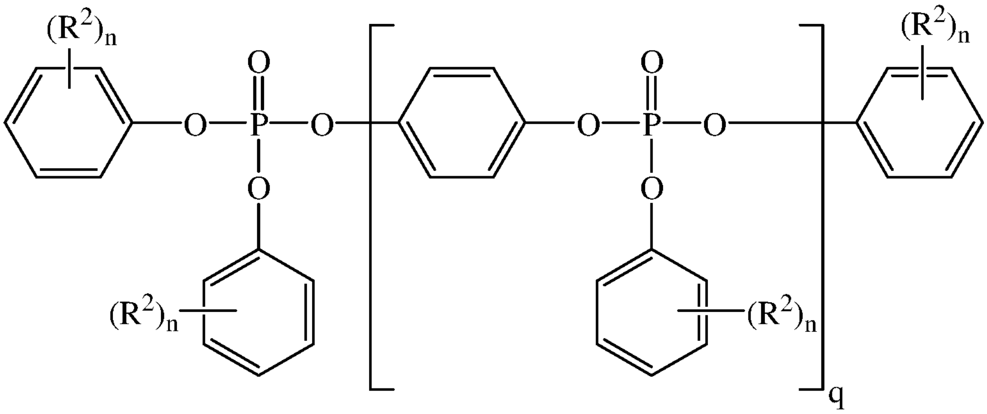

(2)

wherein n is 0, and p is on average 1 to 2; or a combination of the organophosphate ester having structure (1) and the organophosphate ester having structure (2); the ultraviolet absorbing agent comprises a 2-(2'-hydroxyphenyl)benzotriazole, a 2-(2'-hydroxyphenyl)-1,3,5-triazine, or a combination thereof; the composition comprises 18 to 30 parts by weight of the poly(phenylene ether), 25 to 40 parts by weight of the hydrogenated block copolymer, 3 to 10 parts by weight of the organophosphate ester, and 1 to 3 parts by weight of the ultraviolet absorbing agent; the composition further comprises 5 to 15 parts by weight of a propylene homopolymer, and 6 to 10 parts by weight of a polybutene having a number average molecular weight of 500 to 1500 grams/mole; and the flame retardant further comprises 5 to 12 parts by weight of a metal dialkylphosphinate, and 5 to 12 parts by weight of melamine polyphosphate.

Another embodiment is a jacketed cable, comprising: a conductor; an insulating covering surrounding the

conductor; and a jacket surrounding the insulating covering; wherein the jacket comprises a composition comprising 15 to 40 parts by weight of a poly(phenylene ether); 20 to 50 parts by weight of a hydrogenated block copolymer of an alkenyl aromatic monomer and a conjugated diene; 5 to 30 parts by weight of a flame retardant comprising 3 to 15 parts by weight of an organophosphate ester having a melting point of 60 to 150 °C; and 0.5 to 5 parts by weight of an ultraviolet absorbing agent; wherein all parts by weight are based on 100 parts by weight total of polymers and flame retardants. All of the above-described variations of the composition apply as well to the composition as applied to the jacket composition.

A side view of a jacketed cable comprising two insulated conductors is presented in Figure 3, where cable 10 includes a conductor 4, an insulating covering 6 surrounding the conductor, and jacket 8 surrounding the insulating covering 6. A cross section of the cable is presented in Figure 4, where parts are similarly labeled. The jacketed cable can be formed by extrusion coating of the conductor, with either simultaneous or step-wise extrusion of the conductor with the covering and the jacket.

A side view of an alternative jacketed cable 12 is presented in Figure 5. The jacketed cable 12, which is generally circular in cross-section, comprises three insulated conductors, where each insulated conductor a conductor 4, an insulating covering 6 surrounding the conductor, and a jacket 8 surrounding the insulating covering 6. A cross section of the cable is presented in Figure 6, where parts are similarly labeled. The jacketed cable can be formed by extrusion coating of the conductors, with either simultaneous or step-wise extrusion of the conductor with the covering and the jacket.

A side view of an alternative jacketed cable 14 is presented in Figure 7. The jacketed cable 14, which is generally flat in cross-section, comprises three insulated conductors, where each insulated conductor a conductor 4, an insulating covering 6 surrounding the conductor, and a jacket 8 surrounding the insulating covering 6. A cross section of the cable is presented in Figure 8, where parts are similarly labeled. The jacketed cable can be formed by extrusion coating of the conductors, with either simultaneous or step-wise extrusion of the conductor with the covering and the jacket.

A side view of an alternative jacketed cable 16 is presented in Figure 9. The jacketed cable 16, which is generally circular in cross-section, comprises three insulated conductors, where each insulated conductor a conductor 4, an insulating covering 6 surrounding the conductor, and a jacket 8 surrounding the insulating covering 6. A cross section of the cable is presented in Figure 10, where parts are similarly labeled. The jacketed cable can be formed by extrusion coating of the conductors, with either simultaneous or step-wise extrusion of the conductor with the covering and the jacket.

In a very specific embodiment of the jacketed cable, the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C; the hydrogenated block copolymer comprises 25 to 35 weight percent of a polystyrene-poly(ethylene-butylenestyrene)-polystyrene tapered block copolymer; the organophosphate ester comprises an organophosphate ester having structure (1)

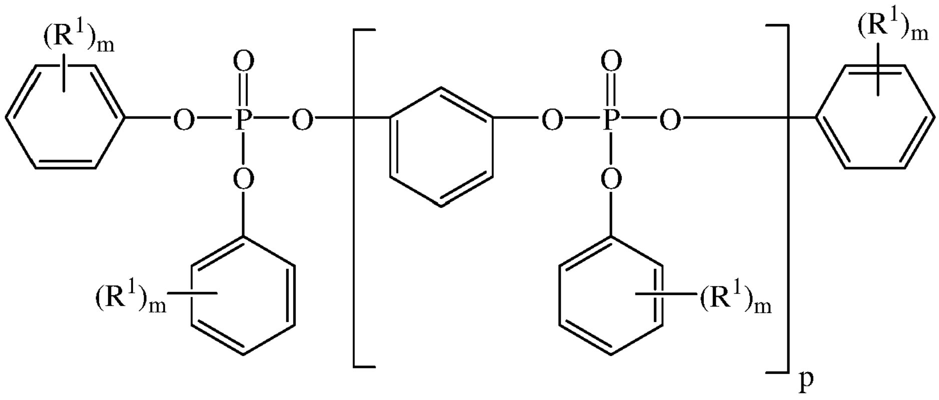

(1)

wherein m is 2, p is on average 1 to 2, and $R^1$ is methyl; or an organophosphate ester having structure (2)

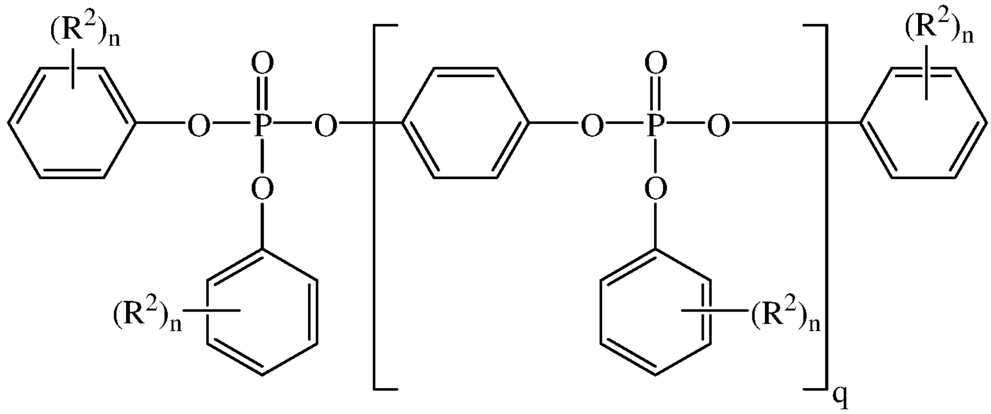

(2)

wherein n is 0, and p is on average 1 to 2; or a combination of the organophosphate ester having structure (1) and the organophosphate ester having structure (2); the ultraviolet absorbing agent comprises a 2-(2'-hydroxyphenyl)benzotriazole, a 2-(2'-hydroxyphenyl)-1,3,5-triazine, or a combination thereof; the composition comprises 18 to 30 parts by weight of the poly(phenylene ether), 25 to 40 parts by weight of the hydrogenated block copolymer, 3 to 10 parts by weight of the organophosphate ester, and 1 to 3 parts by weight of the ultraviolet absorbing agent; the composition further comprises 5 to 15 parts by weight of a propylene homopolymer, and 6 to 10 parts by weight of a polybutene having a number average molecular weight of 500 to 1500 grams/mole; and the flame retardant further comprises 5 to 12 parts by weight of a metal dialkylphosphinate, and 5 to 12 parts by weight of melamine polyphosphate.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

EXAMPLES 1-3, COMPARATIVE EXAMPLES 1-4

Components used to form compositions are summarized in Table 1. In Table 1, the thermoplastic elastomer abbreviated TPE is considered to contain 35 weight percent hydrogenated block copolymer, and 55 weight percent total polymer.

Table 1

| Component | Description |
|---|---|
| PPE | Poly(2,6-dimethyl-1,4-phenylene ether), CAS Reg. No. 24938-67-8, having an intrinsic viscosity of about 0.46 deciliter per gram as measured in chloroform at 25°C; obtained as PPO™ 646 Resin from SABIC Innovative Plastics. |
| TPE | Thermoplastic elastomer containing polystyrene-poly(ethylene/butylene)-polystyrene triblock copolymer (CAS Reg. No. 66070-58-4), polystyrenepoly(ethylene/propylene)-polystyrene triblock copolymer (CAS Reg. No. 68648-89-5), propylene homopolymer (CAS Reg. No. 9003-07-0), ethylene-propylene copolymer (CAS. Reg. No. 9010-79-1), mineral oil (CAS Reg. No. 72623-83-7), and calcium carbonate (CAS Reg. No. 471-34-1); obtained as Sumitomo TPE-SB 2400 from Sumitomo Chemical Co., Ltd. |
| S(EBS)S 1 | Polystyrene-poly(ethylene-butylene-styrene)-polystyrene triblock copolymer having a polystyrene content of about 56-60 weight percent, a melt index less than 1 gram per 10 minutes measured at 230 °C and 5 kilogram load according to ASTM D1238, and a weight average molecular weight of about 260.000 grams/mole; obtained as KRATON™ A1535 from Kraton Performance Polymers Inc. |
| S(EBS)S 2 | Polystyrene-poly(ethylene-butylene-styrene)-polystyrene triblock copolymer having a polystyrene content of about 37-44 weight percent, a melt index of about 7 grams per 10 minutes measured at 260 °C and 5 kilogram load according to ASTM D1238, and a weight average molecular weight of about 154,000 grams/mole; obtained as KRATON™ A1536 from Kraton Performance Polymers Inc. |
| PB | Polybutene, CAS Reg. No. 9003-27-4, having a number average molecular weight of about 800 grams/mole; obtained as INDOPOL™ H50 from BP Chemical. |

(continued)

| Component | Description |
|---|---|
| PP | Propylene homopolymer, CAS Reg. No. 9003-07-0, having a melt massflow rate of 8 grams per 10 minutes, measured according to ASTM D1238 at 230°C and a 2.16 kilogram load; obtained as PP 570P Resin from SABIC Innovative Plastics. |
| TPPO | Triphenylphosphine oxide, CAS Reg. No. 791-28-6; obtained from Shanghai Weifang Fine Chemical Co. Ltd. |
| RBDXP | Resorcinol bis(2,6-dimethylphenyl phosphate), CAS Reg. No. 139189-30-3; obtained as PX-200 from Daihachi. |
| DEPAL | Aluminum tris(diethyl phosphinate), CAS Reg. No. 225789-38-8; obtained as EXOLIT™ OP1230 from Clariant. |
| MPP | Melamine polyphosphate, CAS Reg. No. 56386-64-2, obtained as BUDIT 3141 from Budenheim Iberica, S.A. |
| HQBDPP | Hydroquinone bis(diphenyl phosphate), CAS Reg. No. 51732-57-1, obtained as FYROLFLEX™ Sol-DP from ICL-IP America Inc. |
| HPCP | Hexaphenoxycyclophosphazene, CAS Reg. No. 1184-10-7; obtained as RABITLE™ FP-110 from Fushimi Pharmaceutical Co., Ltd. |
| TBPP | Tris(2,4-di-tert-butylphenyl) phosphite, CAS Reg. No. 31570-04-4; obtained as IRGAFOS™ 168 from BASF Corp. |
| CER | 3,4-Epoxycyclohexylmethyl 3,4-epoxycyclohexanecarboxylate, CAS Reg. No. 2386-87-0; obtained as CELLOXIDE™ 2021P from Daicel Corp. |
| Erucamide | Erucamide, CAS Reg. No. 112-84-5; obtained as KEMAMIDE™ E Ultra from Crompton Corp. |
| BPPH | 2',3-bis [[3-[3, 5-di-tert-butyl-4-hydroxyphenyl]propionyl]] propionohydrazide, CAS Reg. No. 32687-78-8; obtained as IRGANOX™ MD 1024 from BASF. |
| AO 1 | Octadecyl 3,5-di-tert-butyl-4-hydroxyhydrocinnamate, CAS Reg. No. 2082-79-3; obtained as IRGANOX 1076 from BASF. |
| AO 2 | Reaction products of phosphorus trichloride with 1,1'-biphenyl and 2,4-bis(1,1-dimethylethyl)phenol, CAS Reg. No. 119345-01-6; obtained as HOSTANOX™ P-EPQ™ from Clariant. |
| BTZ 1 | 2,2'-Methylenebis[6-(2*H*-benzotriazol-2-yl)-4-(1,1,3,3-tetramethylbutyl)phenol], CAS Reg. No. 103597-45-1; obtained in powder form as TINUVIN™ 360 from BASF. |
| BTZ 2 | 2,2'-Methylenebis[6-(2*H*-benzotriazol-2-yl)-4-(1,1,3,3-tetramethylbutyl)phenol], CAS Reg. No. 103597-45-1; obtained in granule form as TINUVIN™ 360 ED from BASF. |
| $TiO_2$ | Titanium dioxide, CAS Reg. No. 13463-67-7; obtained as TIOXIDE™ R-TC30 from Huntsman. |
| CB | Carbon black, CAS Reg. No. 1333-86-4; obtained as MONARCH™ 800 from Cabot. |
| Pigment Blue 29 | Pigment Blue 29, CAS Reg. No. 57455-37-5; obtained as Ultramarine 5085 from Holliday Pigments. |
| Pigment Red 101 | Pigment Red 101, CAS Reg. No. 1309-37-1; obtained as COLORTHERM™ Red 180M from Bayer. |

Compositions are summarized in Table 2, where component amounts are expressed in parts by weight per 100 parts by weight total of polymers (PPE 0.3, PPE 0.46, TPE, S(EBS)S 1, S(EBS)S 2, PB, and PP) and flame retardants (TPPO, RBDXP, DEPAL, MPP, HQBDPP, and HPCP).

Compositions were compounded in a 38 millimeter internal diameter twin-screw extruder operating at a screw speed of 400 rotations per minute, a throughput of about 30 kilograms/hour, and zone temperatures of 50 °C, 180 °C, 225 °C, 245 °C, 245 °C, 245 °C, 245 °C, 245 °C, 245 °C, 245 °C, 245 °C, and 255 °C, from feed throat to die. All components were added to the extruder via the feed throat. The extrudate was cooled and pelletized.

Prior to use for injection molding, pellets were dried for four hours at 80 °C. Molded parts for property testing were injection molded using a hopper temperature of 50 °C, zone temperatures of 235 to 250 °C in zones 1-3, a nozzle

temperature of 245 °C, a mold temperature of 40 °C, a screw rotation rate of 100 rotations per minute, a back pressure of 90 kilogram force per centimeter$^2$, a holding time of 8 seconds, a cooling time of 20 seconds, an injection speed of 25 millimeters/second, and a holding pressure of 600 kilogram force per centimeter$^2$.

Extrusion coating of copper wire was conducted with a melt temperature at 240 °C without pre-heating of conductor. The line speed was 30 meters/minute. The conductor was American Wire Gauge (AWG) 18 copper wire with a diameter of 1.16 millimeters. The coated wire had a diameter of 2.7 millimeters.

CIELAB color parameters L*, a*, and b* were determined according to ASTM D2244-15a using a D65 standard illuminant. Ultraviolet aging was conducted according to ASTM D4459-12 using a radiant exposure of 36.5 watts/meter$^2$ at 300-400 nanometers, and an exposure time of 300 hours. Other samples were stored for 75 days at 23 °C under ambient lighting. Delta $E^*_{ab}$, which is the color change associated with ultraviolet aging or room temperature aging, was calculated according to ASTM D2244-15a using the equation,

$$\text{Delta } E^*_{ab} = [(\Delta L^*)^2 + (\Delta a^*)^2 + (\Delta b^*)^2]^{1/2}.$$

The VW-1 flammability test was conducted according to UL 1581, "Reference Standard for Electrical Wires, Cables, and Flexible Cords". The 1C and 2C designations refer to tests conducted with a single coated wire and two parallel wires, respectively. A 455 millimeter length of jacketed cable was secured with its longitudinal axis vertical. A gas flame was applied to the sample five times for 15 seconds each time. Where any specimen showed more than 25 percent of the indicator flag burned away or charred after any of the five applications of flame, the sample was judged capable of conveying flame along its length and failed the test. Where any specimen emitted flaming or glowing particles or flaming drops at any time that ignited cotton below the sample, or continued to flame longer than 60 seconds after any application of the gas flame, the sample was judged capable of conveying flame to combustible materials in its vicinity and failed the test. Conversely, a sample passes the test if it does not exhibit any of the failure criteria described in this paragraph.

Results are summarized in Table 2. The first five examples illustrate the effect of flame retardant type on UV resistance, manifested as the color shift with UV exposure, Delta $E^*_{ab}$, UV. The results show that the Example 1 and Example 2 compositions containing the high-melting organophosphate ester flame retardants RBDXP and HQBDPP, exhibit very good resistance to ultraviolet light (manifested as low Delta $E^*_{ab}$, UV values). Relative to Comparative Example 4, Example 3, containing a reduced levels of both the ultraviolet absorbing agent BTZ 2 and the organophosphate ester flame retardant RBDXP, exhibits a reduced color shift on storage, manifested as a low Delta $E^*_{ab}$, 23°C value. Example 3 also exhibits good UV resistance and flame retardancy.

Table 2

| | C. Ex. 1 | C. Ex. 2 | Ex. 1 | C. Ex. 3 | Ex. 2 | C. Ex. 4 | Ex. 3 |
|---|---|---|---|---|---|---|---|
| COMPOSITIONS | | | | | | | |
| Erucamide | 0.402 | 0.402 | 0.402 | 0.402 | 0.402 | 0.402 | 0.402 |
| BPPH | 0.754 | 0.754 | 0.754 | 0.754 | 0.754 | 0.101 | 0.101 |
| AO 1 | 0.754 | 0.754 | 0.754 | 0.754 | 0.754 | 0.000 | 0.000 |
| TBPP | 0.000 | 0.000 | 0.000 | 0.000 | 0.000 | 0.754 | 0.754 |
| AO 2 | 0.251 | 0.251 | 0.251 | 0.251 | 0.251 | 0.251 | 0.251 |
| CER | 0.503 | 0.503 | 0.503 | 0.503 | 0.503 | 0.503 | 0.503 |
| PPE | 25.126 | 25.126 | 25.126 | 25.126 | 25.126 | 25.126 | 23.116 |
| S(EBS)S 2 | 16.080 | 16.080 | 16.080 | 16.080 | 16.080 | 16.080 | 12.060 |
| S(EBS)S 1 | 12.060 | 12.060 | 12.060 | 12.060 | 12.060 | 12.060 | 14.070 |
| TPE | 16.080 | 16.080 | 16.080 | 16.080 | 16.080 | 16.080 | 15.075 |
| PP | 6.030 | 6.030 | 6.030 | 6.030 | 6.030 | 6.030 | 9.045 |
| PB | 7.538 | 7.538 | 7.538 | 7.538 | 7.538 | 7.538 | 7.538 |
| DEPAL | 8.543 | 8.543 | 8.543 | 8.543 | 8.543 | 8.543 | 7.035 |
| MPP | 8.543 | 0.000 | 0.000 | 0.000 | 0.000 | 8.543 | 7.035 |

(continued)

| | C. Ex. 1 | C. Ex. 2 | Ex. 1 | C. Ex. 3 | Ex. 2 | C. Ex. 4 | Ex. 3 |
|---|---|---|---|---|---|---|---|
| COMPOSITIONS | | | | | | | |
| TPPO | 0.000 | 8.543 | 0.000 | 0.000 | 0.000 | 0.000 | 0.000 |
| RBDXP | 0.000 | 0.000 | 8.543 | 0.000 | 0.000 | 0.000 | 5.025 |
| HPCP | 0.000 | 0.000 | 0.000 | 8.543 | 0.000 | 0.000 | 0.000 |
| HQBDPP | 0.000 | 0.000 | 0.000 | 0.000 | 8.543 | 0.000 | 0.000 |
| BTZ 1 | 2.513 | 2.513 | 2.513 | 2.513 | 2.513 | 0.000 | 0.000 |
| BTZ 2 | 0.000 | 0.000 | 0.000 | 0.000 | 0.000 | 2.513 | 1.508 |
| $TiO_2$ | 11.055 | 11.055 | 11.055 | 11.055 | 11.055 | 11.055 | 11.055 |
| CB R203 | 0.000 | 0.000 | 0.000 | 0.000 | 0.000 | 0.000 | 0.000 |
| Pigment Blue 29 | 0.141 | 0.141 | 0.141 | 0.141 | 0.141 | 0.141 | 0.141 |
| Pigment Red 101 | 0.109 | 0.109 | 0.109 | 0.109 | 0.109 | 0.109 | 0.109 |
| PROPERTIES | | | | | | | |
| Delta $E^*_{ab}$, 23°C | ND | ND | ND | ND | ND | 1.2 | 0.7 |
| Delta $E^*_{ab}$, UV | 2.1 | 2.3 | 0.6 | 2.1 | 0.6 | 1.0 | 1.3 |
| VW-1(1C) | pass | pass | fail (2/3 pass) | pass | fail | pass | pass |
| VW-1(2C) | pass | pass | pass | pass | fail | pass | pass |
| ND = not determined | | | | | | | |

## Claims

**1.** A composition, comprising:

15 to 40 parts by weight of a poly(phenylene ether);
20 to 50 parts by weight of a hydrogenated block copolymer of an alkenyl aromatic monomer and a conjugated diene;
5 to 30 parts by weight of a flame retardant comprising 3 to 15 parts by weight of an organophosphate ester having a melting point of 60 to 150 °C; and
0.5 to 5 parts by weight of an ultraviolet absorbing agent;
wherein all parts by weight are based on 100 parts by weight total of polymers and flame retardants.

**2.** The composition of claim 1, wherein the hydrogenated block copolymer comprises 25 to 35 parts by weight of a polystyrene-poly(ethylene-butylene-styrene)-polystyrene tapered block copolymer.

**3.** The composition of claim 2, wherein the polystyrene-poly(ethylene-butylene-styrene)-polystyrene tapered block copolymer comprises 10 to 20 parts by weight of a first polystyrenepoly(ethylene-butylene-styrene)-polystyrene tapered block copolymer having a polystyrene content of 34 to 48 weight percent, and 10 to 20 parts by weight of a second polystyrenepoly(ethylene-butylene-styrene)-polystyrene tapered block copolymer having a polystyrene content of 50 to 65 weight percent.

**4.** The composition of any one of claims 1-3, wherein the organophosphate ester has structure (1) or (2)

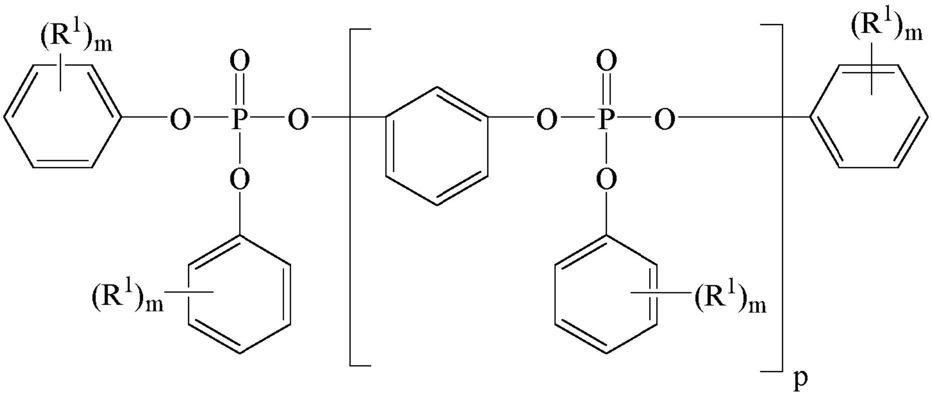

(1)

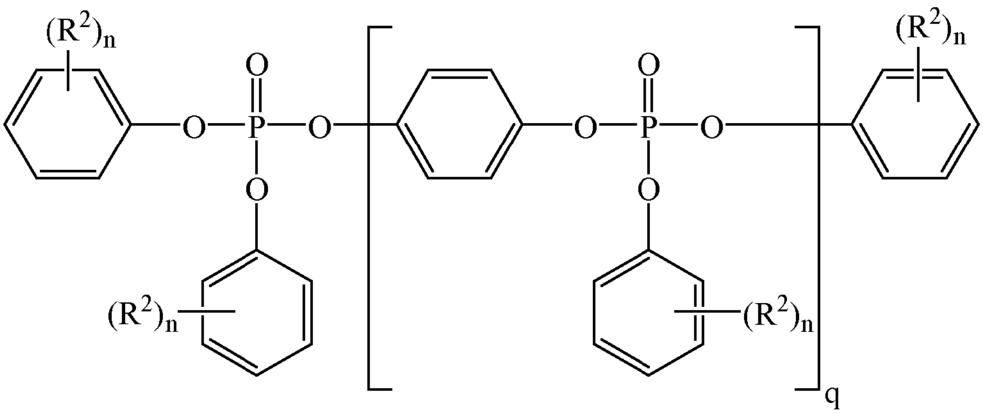

(2)

wherein

m is independently at each occurrence 0, 1 or 2, provided that at least one occurrence of m is 1; p is on average 1 to 3;
$R^1$ is independently at each occurrence $C_1$-$C_4$ alkyl;
n is independently at each occurrence 0, 1 or 2;
q is on average 1 to 3; and
$R^2$ is independently at each occurrence $C_1$-$C_4$ alkyl.

**5.** The composition of claim 4, wherein the organophosphate ester has structure (1), m is 2, p is on average 1 to 2, and $R^1$ is methyl; or wherein the organophosphate ester has structure (2), n is 0, and q is on average 1 to 2.

**6.** The composition of any one of claims 1-5, wherein the flame retardant comprises 3 to 10 parts by weight of the organophosphate ester and further comprises 5 to 12 parts by weight of a metal dialkylphosphinate and 5 to 12 parts by weight of melamine polyphosphate.

**7.** The composition of any one of claims 1-6, wherein the ultraviolet absorbing agent is selected from the group consisting of benzophenones, benzotriazoles, cinnamates, oxanilides, triazines, benzoxazinones, and combinations thereof.

**8.** The composition of any one of claims 1-6, wherein the ultraviolet absorbing agent comprises a 2-(2'-hydroxyphenyl)benzotriazole or a 2-(2'-hydroxyphenyl)-1,3,5-triazine.

**9.** The composition of any one of claims 1-8, further comprising 2 to 15 parts by weight of an ethylene homopolymer, a propylene homopolymer, or a combination thereof.

**10.** The composition of any one of claims 1-9, further comprising 2 to 10 parts by weight of a polybutene having a number average molecular weight of 500 to 1500 grams/mole.

**11.** The composition of claim 1, wherein

the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C;
the hydrogenated block copolymer comprises 25 to 35 weight percent of a polystyrenepoly(ethylene-butylene-styrene)-polystyrene tapered block copolymer;
the organophosphate ester comprises an organophosphate ester having structure (1)

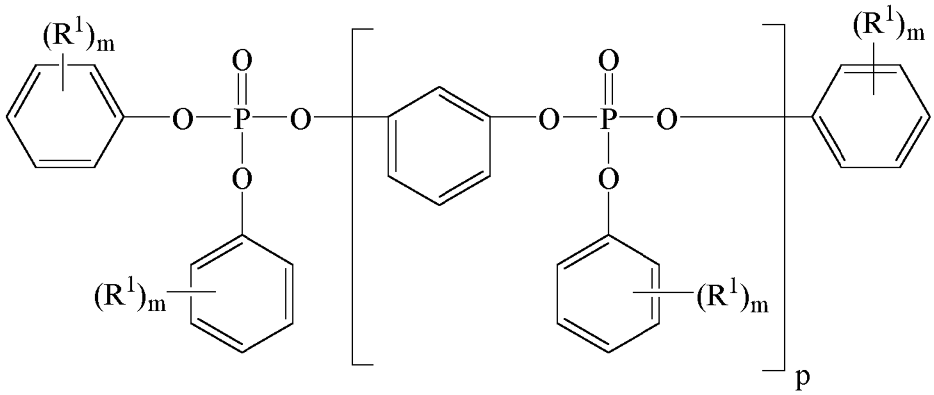

(1)

wherein m is 2, p is on average 1 to 2, and $R^1$ is methyl; an organophosphate ester having structure (2)

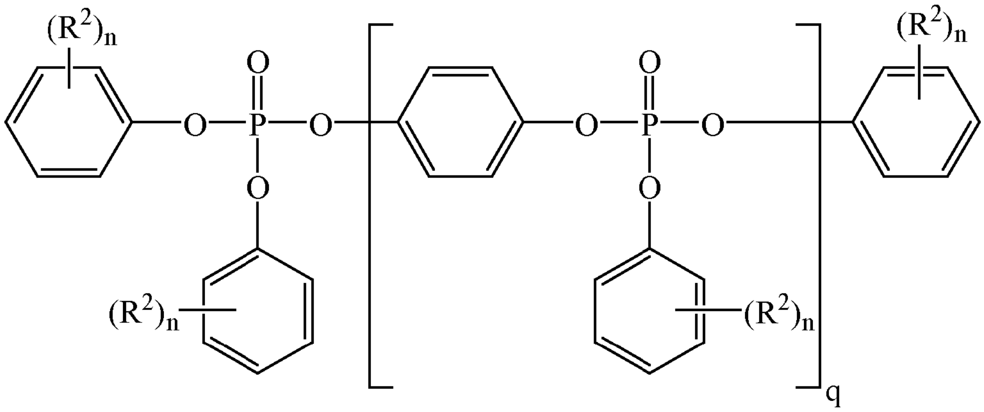

(2)

wherein n is 0, and q is on average 1 to 2; or a combination of the organophosphate ester having structure (1) and the organophosphate ester having structure (2);
the ultraviolet absorbing agent comprises a 2-(2'-hydroxyphenyl)benzotriazole, a 2-(2'-hydroxyphenyl)-1,3,5-triazine, or a combination thereof;
the composition comprises

18 to 30 parts by weight of the poly(phenylene ether),
25 to 40 parts by weight of the hydrogenated block copolymer,
3 to 10 parts by weight of the organophosphate ester, and
1 to 3 parts by weight of the ultraviolet absorbing agent;

the composition further comprises

5 to 15 parts by weight of a propylene homopolymer, and
6 to 10 parts by weight of a polybutene having a number average molecular weight of 500 to 1500 grams/mole; and

the flame retardant further comprises

5 to 12 parts by weight of a metal dialkylphosphinate, and
5 to 12 parts by weight of melamine polyphosphate.

**12.** An insulated conductor, comprising:

a conductor; and
an insulating covering disposed over the conductor;
wherein the insulating covering comprises a composition comprising

15 to 40 parts by weight of a poly(phenylene ether);
20 to 50 parts by weight of a hydrogenated block copolymer of an alkenyl aromatic monomer and a conjugated diene;
5 to 30 parts by weight of a flame retardant comprising 3 to 15 parts by weight of an organophosphate ester having a melting point of 60 to 150 °C; and
0.5 to 5 parts by weight of an ultraviolet absorbing agent;
wherein all parts by weight are based on 100 parts by weight total of polymers and flame retardants.

**13.** The insulated conductor of claim 12, wherein

the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C;
the hydrogenated block copolymer comprises 25 to 35 weight percent of a polystyrenepoly(ethylene-butylene-styrene)-polystyrene tapered block copolymer;
the organophosphate ester comprises an organophosphate ester having structure (1)

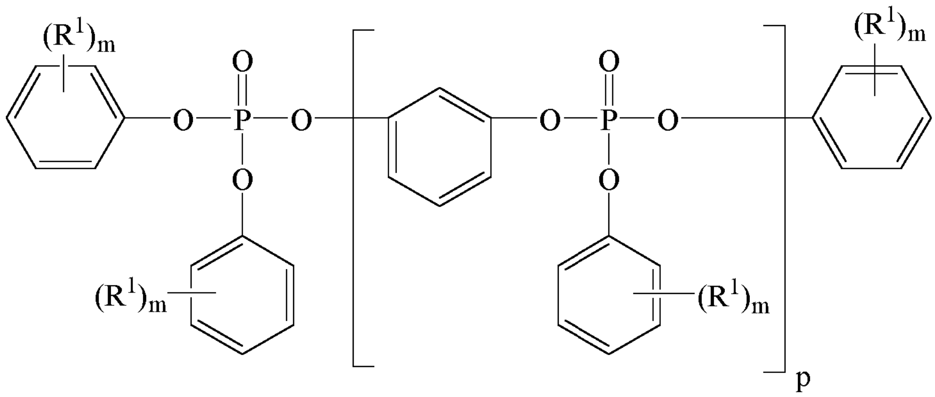

(1)

wherein m is 2, p is on average 1 to 2, and $R^1$ is methyl; or an organophosphate ester having structure (2)

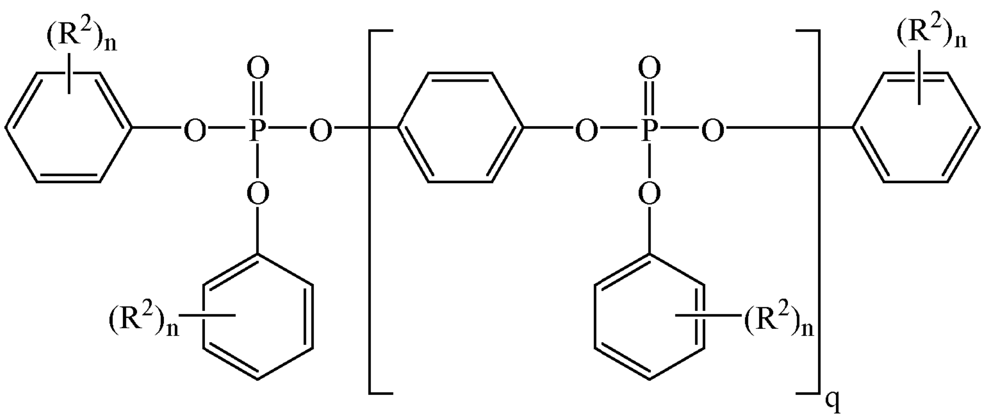

(2)

wherein n is 0, and q is on average 1 to 2; or a combination of the organophosphate ester having structure (1)

and the organophosphate ester having structure (2);
the ultraviolet absorbing agent comprises a 2-(2'-hydroxyphenyl)benzotriazole, a 2-(2'-hydroxyphenyl)-1,3,5-triazine, or a combination thereof;
the composition comprises

18 to 30 parts by weight of the poly(phenylene ether),
25 to 40 parts by weight of the hydrogenated block copolymer,
3 to 10 parts by weight of the organophosphate ester, and
1 to 3 parts by weight of the ultraviolet absorbing agent;

the composition further comprises

5 to 15 parts by weight of a propylene homopolymer, and
6 to 10 parts by weight of a polybutene having a number average molecular weight of 500 to 1500 grams/mole; and

the flame retardant further comprises

5 to 12 parts by weight of a metal dialkylphosphinate, and
5 to 12 parts by weight of melamine polyphosphate.

**14.** A jacketed cable, comprising:

a conductor;
an insulating covering surrounding the conductor; and
a jacket surrounding the insulating covering;
wherein the jacket comprises a composition comprising

15 to 40 parts by weight of a poly(phenylene ether);
20 to 50 parts by weight of a hydrogenated block copolymer of an alkenyl aromatic monomer and a conjugated diene;
5 to 30 parts by weight of a flame retardant comprising 3 to 15 parts by weight of an organophosphate ester having a melting point of 60 to 150 °C; and
0.5 to 5 parts by weight of an ultraviolet absorbing agent;
wherein all parts by weight are based on 100 parts by weight total of polymers and flame retardants.

**15.** The jacketed cable of claim 14, wherein

the poly(phenylene ether) comprises a poly(2,6-dimethyl-1,4-phenylene ether) having an intrinsic viscosity of 0.3 to 0.6 deciliter per gram, measured by Ubbelohde viscometer in chloroform at 25 °C;
the hydrogenated block copolymer comprises 25 to 35 weight percent of a polystyrenepoly(ethylene-butylene-styrene)-polystyrene tapered block copolymer;
the organophosphate ester comprises an organophosphate ester having structure (1)

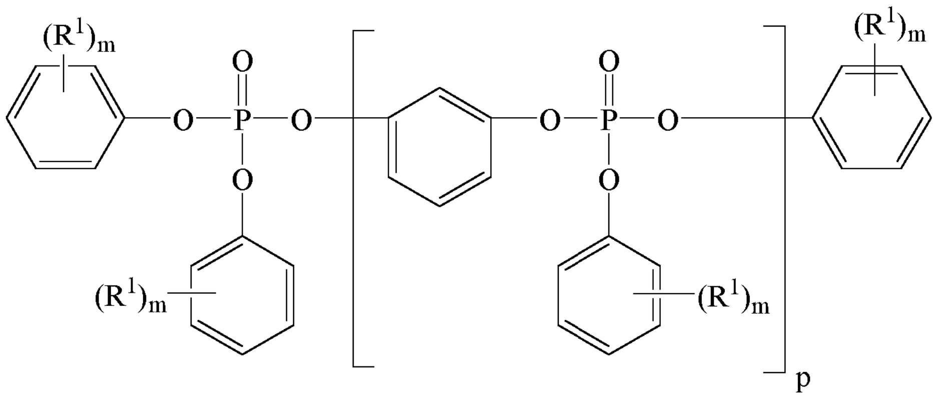

(1)

wherein m is 2, p is on average 1 to 2, and $R^1$ is methyl; or an organophosphate ester having structure (2)

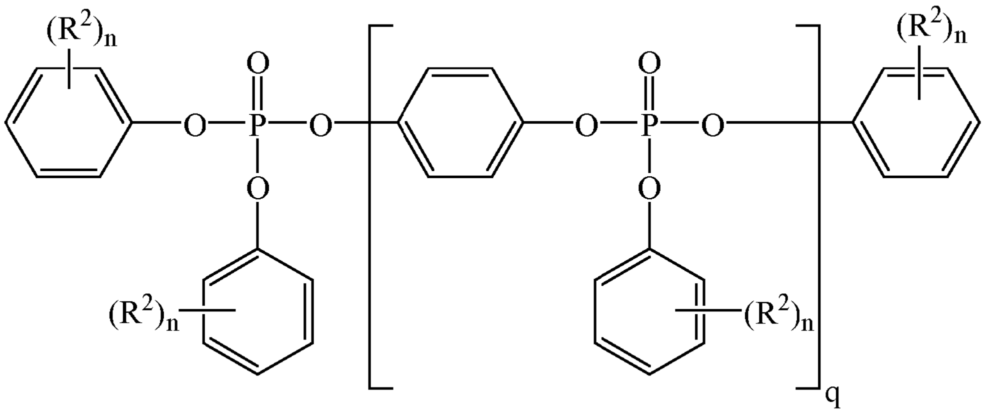

(2)

wherein n is 0, and q is on average 1 to 2; or a combination of the organophosphate ester having structure (1) and the organophosphate ester having structure (2);
the ultraviolet absorbing agent comprises a 2-(2'-hydroxyphenyl)benzotriazole, a 2-(2'-hydroxyphenyl)-1,3,5-triazine, or a combination thereof;
the composition comprises

18 to 30 parts by weight of the poly(phenylene ether),
25 to 40 parts by weight of the hydrogenated block copolymer,
3 to 10 parts by weight of the organophosphate ester, and
1 to 3 parts by weight of the ultraviolet absorbing agent;

the composition further comprises

5 to 15 parts by weight of a propylene homopolymer, and
6 to 10 parts by weight of a polybutene having a number average molecular weight of 500 to 1500 grams/mole; and

the flame retardant further comprises

5 to 12 parts by weight of a metal dialkylphosphinate, and
5 to 12 parts by weight of melamine polyphosphate.

**Patentansprüche**

**1.** Zusammensetzung, umfassend:

15 bis 40 Gewichtsteile eines Poly(phenylenethers);
20 bis 50 Gewichtsteile eines hydrierten Blockcopolymers eines alkenylaromatischen Monomers und eines konjugierten Diens;
5 bis 30 Gewichtsteile eines Flammschutzmittels, umfassend 3 bis 15 Gewichtsteile eines Organophosphatesters mit einem Schmelzpunkt von 60 bis 150°C; und
0,5 bis 5 Gewichtsteile eines ultraviolett-absorbierenden Mittels;
wobei alle Gewichtsteile auf insgesamt 100 Gewichtsteile Polymere und Flammschutzmittel bezogen sind.

**2.** Zusammensetzung nach Anspruch 1, wobei das hydrierte Blockcopolymer 25 bis 35 Gewichtsteile eines Polystyrol-Poly(ethylen-butylen-styrol)-Polystyrol-Blockcopolymers mit sich verändernder Zusammensetzung (tapered) umfasst.

**3.** Zusammensetzung nach Anspruch 2, wobei das Polystyrol-Poly(ethylen-butylen-styrol)-Polystyrol-Blockcopolymer mit sich verändernder Zusammensetzung (tapered) 10 bis 20 Gewichtsteile eines ersten Polystyrol-Poly(ethylen-butylen-styrol)-Polystyrol-Blockcopolymers mit sich verändernder Zusammensetzung (tapered) mit einem Polystyrolgehalt von 34 bis 48 Gewichtsprozent und 10 bis 20 Gewichtsteile eines zweiten Polystyrol-Poly(ethylen-butylenstyrol)-Polystyrol-Blockcopolymers mit sich verändernder Zusammensetzung (tapered) mit einem Polystyrolgehalt von 50 bis 65 Gewichtsprozent umfasst.

4. Zusammensetzung nach irgendeinem der Ansprüche 1 bis 3, wobei der Organophosphatester die Struktur (1) oder (2) aufweist

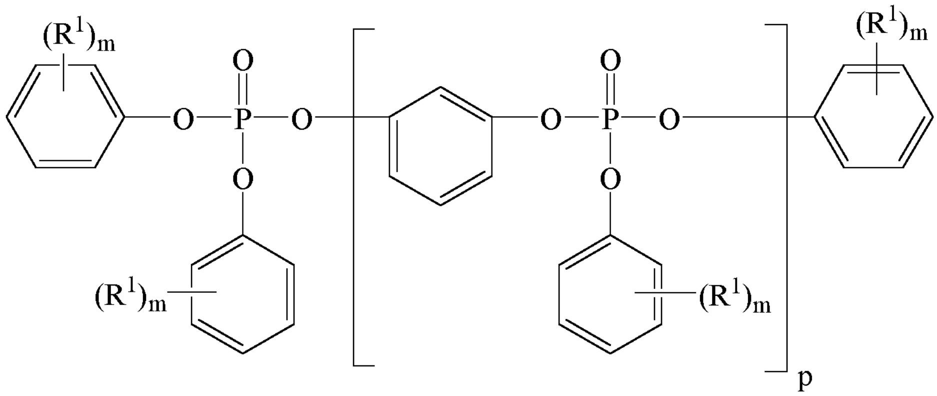

(1)

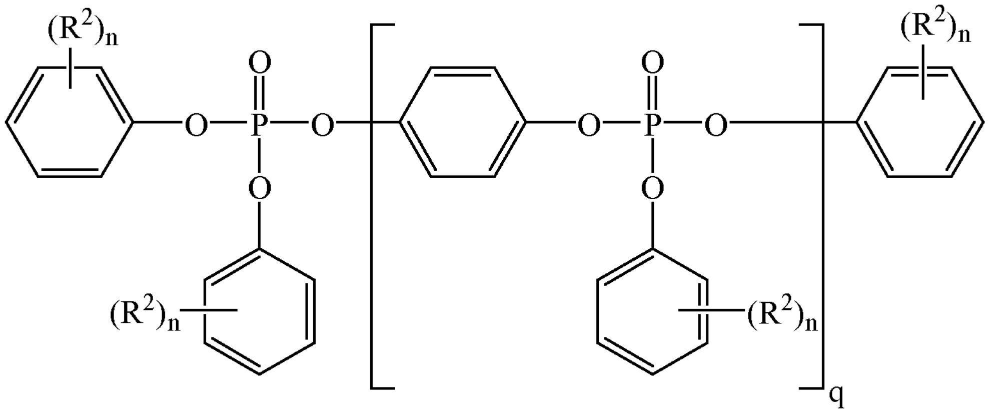

(2)

wobei

m unabhängig bei jedem Vorkommen 0, 1 oder 2 ist, vorausgesetzt, dass mindestens ein Vorkommen von m 1 ist;
p im Durchschnitt 1 bis 3 ist;
$R^1$ unabhängig bei jedem Vorkommen $C_1$-$C_4$-Alkyl ist;
n unabhängig bei jedem Vorkommen 0, 1 oder 2 ist;
q im Durchschnitt 1 bis 3 ist; und
$R^2$ unabhängig bei jedem Vorkommen $C_1$-$C_4$-Alkyl ist.

5. Zusammensetzung nach Anspruch 4, wobei der Organophosphatester die Struktur (1) aufweist, m 2 ist, p im Durchschnitt 1 bis 2 ist und $R^1$ Methyl ist; oder wobei der Organophosphatester die Struktur (2) aufweist, n 0 ist und p im Durchschnitt 1 bis 2 ist.

6. Zusammensetzung nach irgendeinem der Ansprüche 1 bis 5, wobei das Flammschutzmittel 3 bis 10 Gewichtsteile des Organophosphatesters umfasst und ferner 5 bis 12 Gewichtsteile eines Metalldialkylphosphinats und 5 bis 12 Gewichtsteile Melaminpolyphosphat umfasst.

7. Zusammensetzung nach irgendeinem der Ansprüche 1 bis 6, wobei das ultraviolett-absorbierende Mittel ausgewählt ist aus der Gruppe bestehend aus Benzophenonen, Benzotriazolen, Cinnamaten, Oxaniliden, Triazinen, Benzoxazinonen und Kombinationen davon.

**8.** Zusammensetzung nach irgendeinem der Ansprüche 1 bis 6, wobei das ultraviolett-absorbierende Mittel ein 2-(2'-Hydroxyphenyl)-benzotriazol oder ein 2-(2'-Hydroxyphenyl)-1,3,5-triazin umfasst.

**9.** Zusammensetzung nach irgendeinem der Ansprüche 1 bis 8, ferner umfassend 2 bis 15 Gewichtsteile eines Ethylen-Homopolymers, eines Propylen-Homopolymers oder einer Kombination davon.

**10.** Zusammensetzung nach irgendeinem der Ansprüche 1 bis 9, ferner umfassend 2 bis 10 Gewichtsteile eines Polybutens mit einem zahlengemittelten Molekulargewicht von 500 bis 1500 Gramm/Mol.

**11.** Zusammensetzung nach Anspruch 1, wobei

der Poly(phenylenether) einen Poly(2,6-dimethyl-1,4-phenylenether) mit einer intrinsischen Viskosität bzw. Grenzviskosität von 0,3 bis 0,6 Deziliter pro Gramm, gemessen mit einem Ubbelohde-Viskosimeter in Chloroform bei 25°C, umfasst;
das hydrierte Blockcopolymer 25 bis 35 Gewichtsprozent eines Polystyrol-Poly(ethylenbutylen-styrol)-Polystyrol-Blockcopolymers mit sich verändernder Zusammensetzung (tapered) umfasst;
der Organophosphatester einen Organophosphatester mit der Struktur (1)

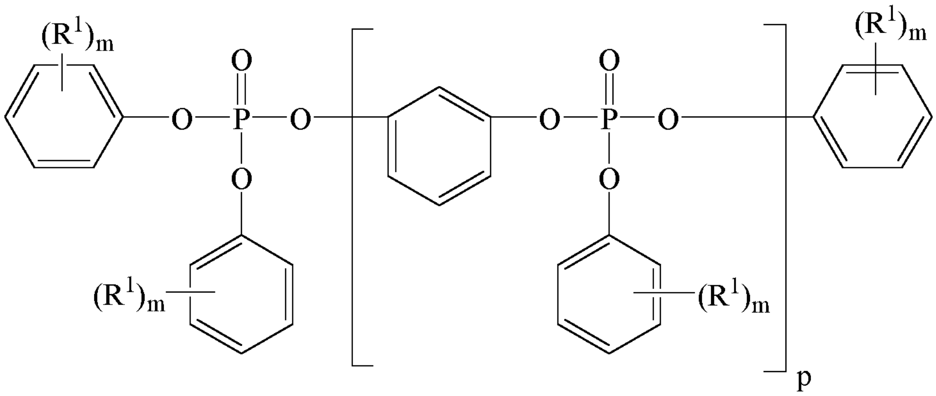

(1)

wobei m 2 ist, p im Durchschnitt 1 bis 2 ist und $R^1$ Methyl ist; einen Organophosphatester mit der Struktur (2)

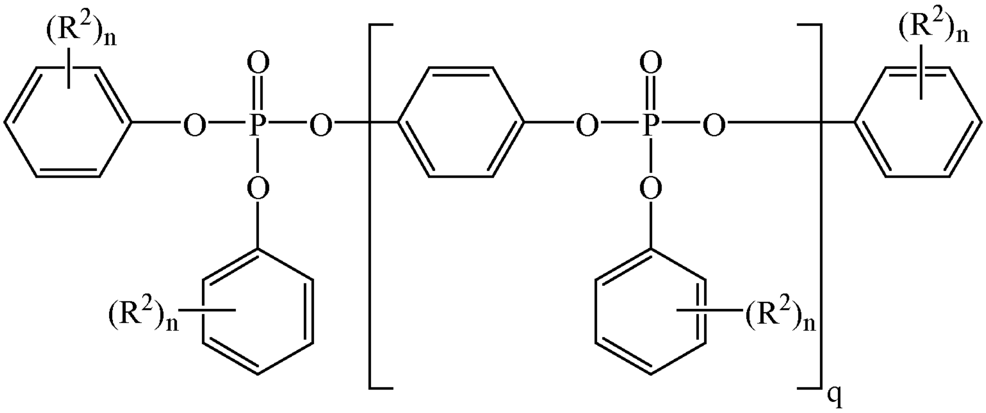

(2)

wobei n 0 ist und p im Durchschnitt 1 bis 2 ist; oder eine Kombination aus dem Organophosphatester mit der Struktur (1) und dem Organophosphatester mit der Struktur (2) umfasst;
das ultraviolett-absorbierende Mittel ein 2-(2'-Hydroxyphenyl)-benzotriazol, ein 2-(2'-Hydroxyphenyl)-1,3,5-triazin oder eine Kombination davon umfasst;
die Zusammensetzung

18 bis 30 Gewichtsteile des Poly(phenylenethers),
25 bis 40 Gewichtsteile des hydrierten Blockcopolymers,

3 bis 10 Gewichtsteile des Organophosphatesters und
1 bis 3 Gewichtsteile des ultraviolett-absorbierenden Mittels umfasst;

die Zusammensetzung ferner

5 bis 15 Gewichtsteile eines Propylen-Homopolymers und
6 bis 10 Gewichtsteile eines Polybutens mit einem zahlengemittelten Molekulargewicht von 500 bis 1500 Gramm/Mol umfasst; und

das Flammschutzmittel ferner

5 bis 12 Gewichtsteile eines Metalldialkylphosphinats und
5 bis 12 Gewichtsteile Melaminpolyphosphat umfasst.

**12.** Isolierter Leiter, umfassend:

einen Leiter; und
eine isolierende Abdeckung, die über dem Leiter angeordnet ist;
wobei die isolierende Abdeckung eine Zusammensetzung umfasst, umfassend

15 bis 40 Gewichtsteile eines Poly(phenylenethers);
20 bis 50 Gewichtsteile eines hydrierten Blockcopolymers eines alkenylaromatischen Monomers und eines konjugierten Diens;
5 bis 30 Gewichtsteile eines Flammschutzmittels, umfassend 3 bis 15 Gewichtsteile eines Organophosphatesters mit einem Schmelzpunkt von 60 bis 150°C; und
0,5 bis 5 Gewichtsteile eines ultraviolett-absorbierenden Mittels;

wobei alle Gewichtsteile auf insgesamt 100 Gewichtsteile Polymere und Flammschutzmittel bezogen sind.

**13.** Isolierter Leiter nach Anspruch 12, wobei

der Poly(phenylenether) einen Poly(2,6-dimethyl-1,4-phenylenether) mit einer intrinsischen Viskosität bzw. Grenzviskosität von 0,3 bis 0,6 Deziliter pro Gramm, gemessen mit einem Ubbelohde-Viskosimeter in Chloroform bei 25°C, umfasst;
das hydrierte Blockcopolymer 25 bis 35 Gewichtsprozent eines Polystyrol-Poly(ethylenbutylen-styrol)-Polystyrol-Blockcopolymers mit sich verändernder Zusammensetzung (tapered) umfasst;
der Organophosphatester einen Organophosphatester mit der Struktur (1)

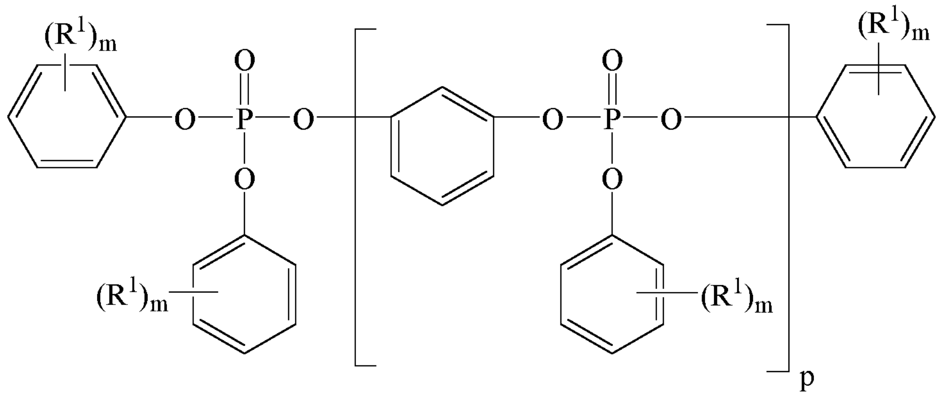

(1)

wobei m 2 ist, p im Durchschnitt 1 bis 2 ist und $R^1$ Methyl ist; oder einen Organophosphatester mit der Struktur (2)

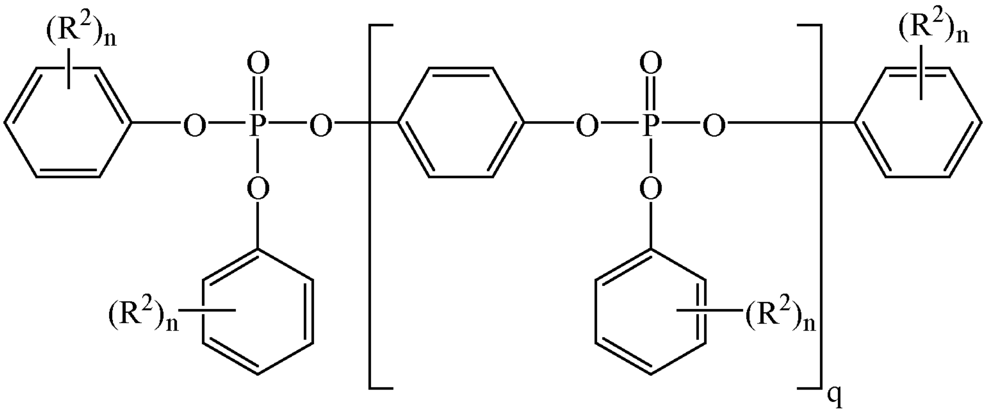

(2)

wobei n 0 ist und p im Durchschnitt 1 bis 2 ist; oder eine Kombination aus dem Organophosphatester mit der Struktur (1) und dem Organophosphatester mit der Struktur (2) umfasst;
das ultraviolett-absorbierende Mittel ein 2-(2'-Hydroxyphenyl)benzotriazol, ein 2-(2'-Hydroxyphenyl)-1,3,5-triazin oder eine Kombination davon umfasst;
die Zusammensetzung

18 bis 30 Gewichtsteile des Poly(phenylenethers),
25 bis 40 Gewichtsteile des hydrierten Blockcopolymers,
3 bis 10 Gewichtsteile des Organophosphatesters und
1 bis 3 Gewichtsteile des ultraviolett-absorbierenden Mittels umfasst;

die Zusammensetzung ferner

5 bis 15 Gewichtsteile eines Propylen-Homopolymers und
6 bis 10 Gewichtsteile eines Polybutens mit einem zahlengemittelten Molekulargewicht von 500 bis 1500 Gramm/Mol; und

das Flammschutzmittel ferner

5 bis 12 Gewichtsteile eines Metalldialkylphosphinats und
5 bis 12 Gewichtsteile Melaminpolyphosphat umfasst.

**14.** Ummanteltes Kabel, umfassend:

einen Leiter;
eine isolierende Abdeckung, die den Leiter umgibt; und
einen Mantel, der die isolierende Abdeckung umgibt;
wobei die Ummantelung eine Zusammensetzung umfasst, umfassend

15 bis 40 Gewichtsteile eines Poly(phenylenethers);
20 bis 50 Gewichtsteile eines hydrierten Blockcopolymers eines alkenylaromatischen Monomers und eines konjugierten Diens;
5 bis 30 Gewichtsteile eines Flammschutzmittels, umfassend 3 bis 15 Gewichtsteile eines Organophosphatesters mit einem Schmelzpunkt von 60 bis 150°C; und
0,5 bis 5 Gewichtsteile eines ultraviolett-absorbierenden Mittels;
wobei alle Gewichtsteile auf insgesamt 100 Gewichtsteile Polymere und Flammschutzmittel bezogen sind.

**15.** Ummanteltes Kabel nach Anspruch 14, wobei

der Poly(phenylenether) einen Poly(2,6-dimethyl-1,4-phenylenether) mit einer intrinsischen Viskosität bzw. Grenzviskosität von 0,3 bis 0,6 Deziliter pro Gramm, gemessen mit einem Ubbelohde-Viskosimeter in Chloroform bei 25°C, umfasst;
das hydrierte Blockcopolymer 25 bis 35 Gewichtsprozent eines Polystyrol-Poly(ethylenbutylen-styrol)-Polystyrol-Blockcopolymers mit sich verändernder Zusammensetzung (tapered) umfasst;
der Organophosphatester einen Organophosphatester mit der Struktur (1)

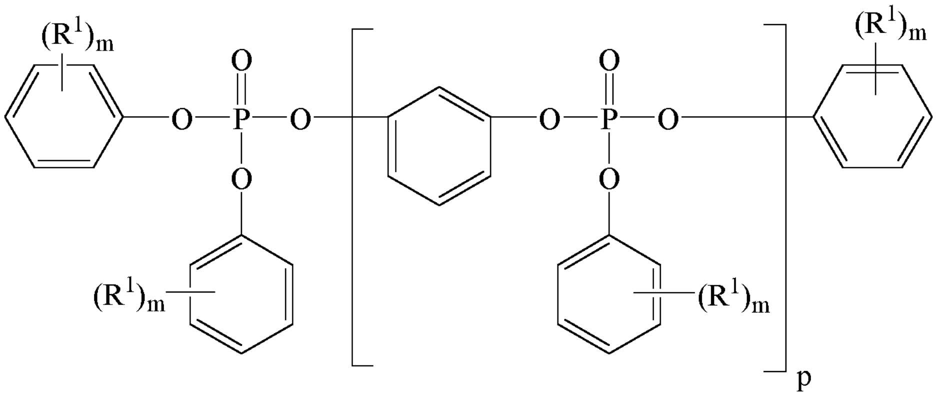

(1)

wobei m 2 ist, p im Durchschnitt 1 bis 2 ist und $R^1$ Methyl ist; oder einen Organophosphatester mit der Struktur (2)

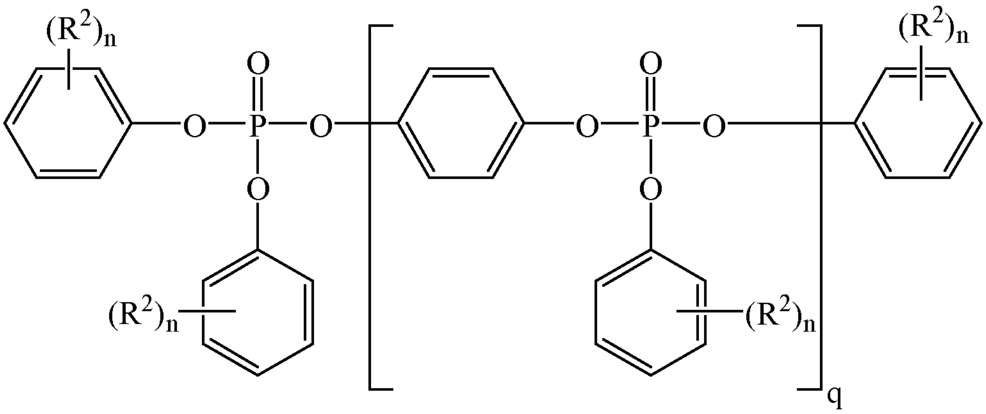

(2)

wobei n 0 ist und p im Durchschnitt 1 bis 2 ist; oder eine Kombination aus dem Organophosphatester mit der Struktur (1) und dem Organophosphatester mit der Struktur (2) umfasst;

das ultraviolett-absorbierende Mittel ein 2-(2'-Hydroxyphenyl)-benzotriazol, ein 2-(2'-Hydroxyphenyl)-1,3,5-triazin oder eine Kombination davon umfasst;
die Zusammensetzung

18 bis 30 Gewichtsteile des Poly(phenylenethers),
25 bis 40 Gewichtsteile des hydrierten Blockcopolymers,
3 bis 10 Gewichtsteile des Organophosphatesters und
1 bis 3 Gewichtsteile des ultraviolett-absorbierenden Mittels umfasst;

die Zusammensetzung ferner

5 bis 15 Gewichtsteile eines Propylen-Homopolymers und
6 bis 10 Gewichtsteile eines Polybutens mit einem zahlengemittelten Molekulargewicht von 500 bis 1500 Gramm/Mol umfasst; und

das Flammschutzmittel ferner

5 bis 12 Gewichtsteilen eines Metalldialkylphosphinats und
5 bis 12 Gewichtsteile Melaminpolyphosphat umfasst.

## Revendications

1. Composition comprenant :

   15 à 40 parties en poids d'un poly(phénylène éther) ;
   20 à 50 parties en poids d'un copolymère à blocs hydrogénés d'un monomère alcénylaromatique et d'un diène conjugué ;
   5 à 30 parties en poids d'un retardateur de flamme contenant 3 à 15 parties en poids d'un ester organophosphate ayant un point de fusion de 60 à 150 °C ; et
   0,5 à 5 parties en poids d'un agent absorbant les ultraviolets ;
   dans laquelle toutes les parties en poids sont rapportées à 100 parties en poids du total des polymères et des retardateurs de flamme.

2. Composition selon la revendication 1, dans laquelle le copolymère à blocs hydrogénés comprend 25 à 35 parties en poids d'un copolymère à blocs à gradient de composition polystyrène-poly(éthylène-butylène-styrène)-polystyrène.

3. Composition selon la revendication 2, dans laquelle le copolymère à blocs à gradient de composition polystyrène-poly(éthylène-butylène-styrène)-polystyrène comprend 10 à 20 parties en poids d'un premier copolymère à blocs à gradient de composition polystyrène-poly(éthylènebutylène-styrène)-polystyrène ayant une teneur en polystyrène de 34 à 48 pour cent en poids et 10 à 20 parties en poids d'un second copolymère à blocs à gradient de composition polystyrène-poly(éthylènebutylène-styrène)-polystyrène ayant une teneur en polystyrène de 50 à 65 pour cent en poids.

4. Composition selon l'une des revendications 1 à 3, dans laquelle l'ester organophosphate a la structure (1) ou (2)

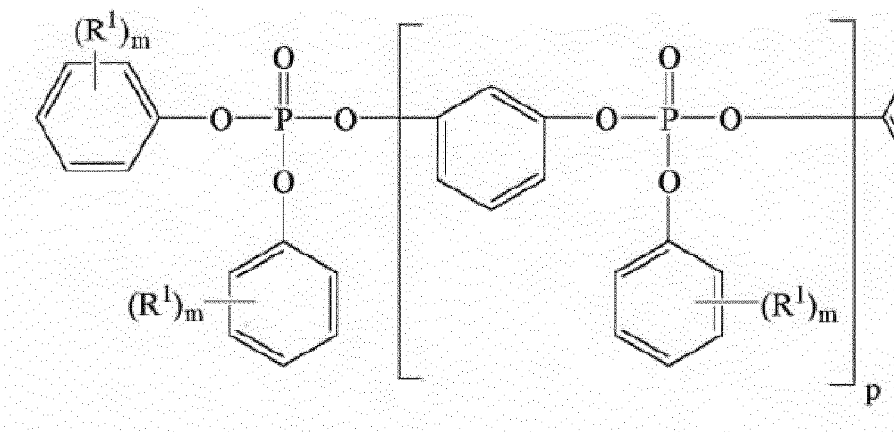

(1)

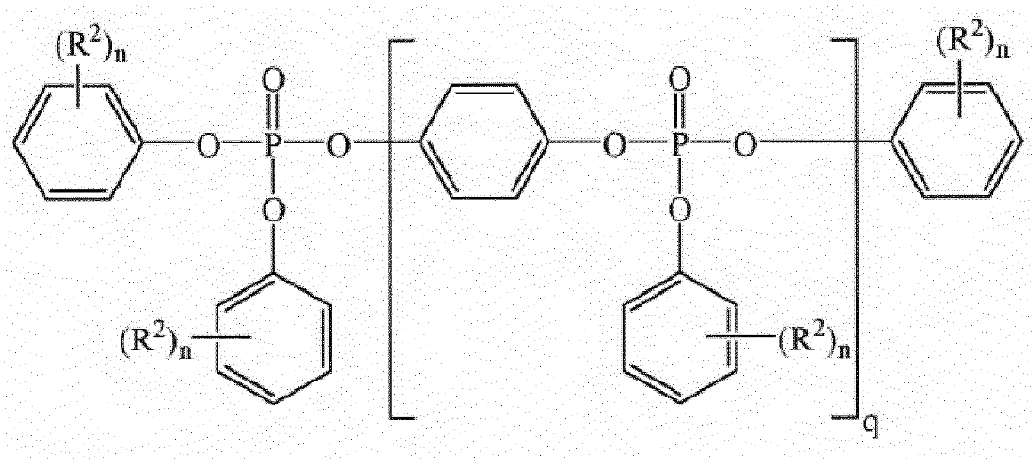

(2)

dans lesquelles

m représente indépendamment à chaque occurrence 0, 1 ou 2, à la condition qu'au moins une occurrence de m représente 1 ;
p représente en moyenne 1 à 3 ;
$R^1$ représente indépendamment à chaque occurrence un alkyle en $C_1$-$C_4$ ;
n représente indépendamment à chaque occurrence 0, 1 ou 2 ;
q représente en moyenne 1 à 3 ; et
$R^2$ représente indépendamment à chaque occurrence un alkyle en $C_1$-$C_4$.

5. Composition selon la revendication 4, dans laquelle l'ester organophosphate a la structure (1), m représente 2, p représente en moyenne 1 à 2, et $R^1$ est un méthyle ; ou dans laquelle l'ester organophosphate a la structure (2), n représente 0 et q représente en moyenne 1 à 2.

6. Composition selon l'une des revendications 1 à 5, dans laquelle le retardateur de flamme comprend 3 à 10 parties en poids de l'ester organophosphate et comprend en outre 5 à 12 parties en poids d'un dialkylphosphinate métallique et 5 à 12 parties en poids d'un polyphosphate de mélamine.

7. Composition selon l'une des revendications 1 à 6, dans laquelle l'agent absorbant les ultraviolets est choisi dans le groupe consistant en les benzophénones, les benzotriazoles, les cinnamates, les oxalinides, les triazines, les benzoxazinones et les combinaisons de ceux-ci.

8. Composition selon l'une des revendications 1 à 6, dans laquelle l'agent absorbant les ultraviolets comprend un 2-(2'-hydroxyphényl)benzotriazole ou une 2-(2'-hydroxyphényl)-1,3,5-triazine.

9. Composition selon l'une des revendications 1 à 8, comprenant en outre 2 à 15 parties en poids d'un homopolymère de l'éthylène, d'un homopolymère du propylène ou d'une combinaison de ceux-ci.

10. Composition selon l'une des revendications 1 à 9, comprenant en outre 2 à 10 parties en poids d'un polybutène ayant une masse moléculaire moyenne en nombre de 500 à 1 500 grammes/mole.

11. Composition selon la revendication 1, dans laquelle le poly(phénylène éther) comprend un poly(2,6-diméthyl-1,4-phénylène éther) ayant une viscosité intrinsèque de 0,3 à 0,6 décilitre par gramme, mesurée par un viscosimètre Ubbelohde dans le chloroforme à 25 °C ;

le copolymère à blocs hydrogénés comprend 25 à 35 pour cent en poids d'un copolymère à blocs à gradient de composition polystyrène-poly(éthylène-butylène-styrène)-polystyrène ;
l'ester organophosphate comprend un ester organophosphate ayant la structure (1)

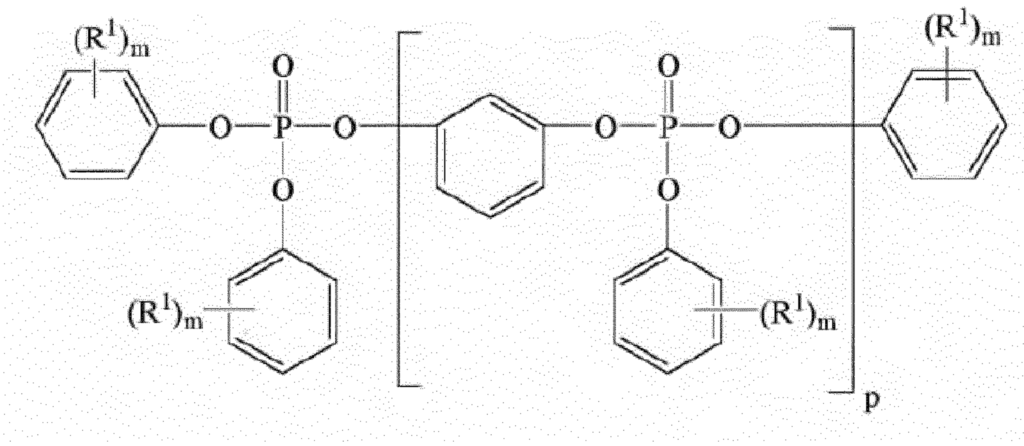

(1)

dans laquelle m représente 2, p représente en moyenne 1 à 2, et $R^1$ représente un méthyle ; un ester organophosphate ayant la structure (2)

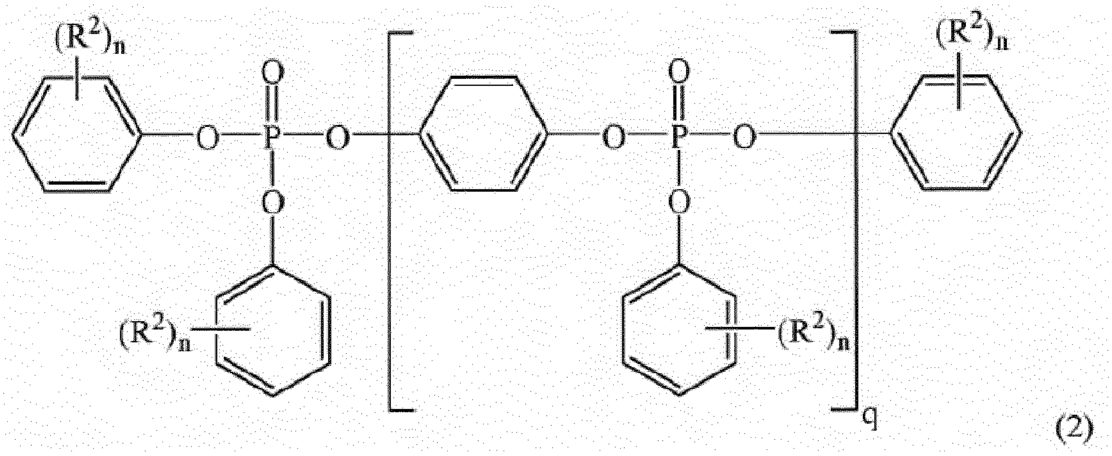

(2)

dans laquelle n représente 0, et q représente en moyenne 1 à 2 ; ou une combinaison de l'ester organophosphate ayant la structure (1) et de l'ester organophosphate ayant la structure (2) ;
l'agent absorbant les ultraviolets comprend un 2-(2'-hydroxyphényl)benzotriazole, une 2-(2'-hydroxyphényl)-1,3,5-triazine ou une combinaison de ceux-ci ;
la composition comprend

18 à 30 parties en poids du poly(phénylène éther),
25 à 40 parties en poids du copolymère à blocs hydrogénés,
3 à 10 parties en poids de l'ester organophosphate, et
1 à 3 parties en poids de l'agent absorbant les ultraviolets ;

la composition comprend en outre

5 à 15 parties en poids d'un homopolymère du propylène, et
6 à 10 parties en poids d'un polybutène ayant une masse moléculaire moyenne en nombre de 500 à 1 500 grammes/mole ; et

le retardateur de flamme comprend en outre

5 à 12 parties en poids d'un dialkylphosphinate métallique et
5 à 12 parties en poids d'un polyphosphate de mélamine.

**12.** Conducteur isolé, comprenant :

un conducteur ; et
une enveloppe isolante disposée par-dessus le conducteur ;
dans lequel l'enveloppe isolante comprend une composition comprenant

15 à 40 parties en poids d'un poly(phénylène éther) ;
20 à 50 parties en poids d'un copolymère à blocs hydrogénés d'un monomère alcénylaromatique et d'un diène conjugué ;
5 à 30 parties en poids d'un retardateur de flamme contenant 3 à 15 parties en poids d'un ester organophosphate ayant un point de fusion de 60 à 150 °C ; et
0,5 à 5 parties en poids d'un agent absorbant les ultraviolets ;
dans laquelle toutes les parties en poids sont rapportées à 100 parties en poids du total des polymères et des retardateurs de flamme.

**13.** Conducteur isolé selon la revendication 12, dans lequel

le poly(phénylène éther) comprend un poly(2,6-diméthyl-1,4-phénylène éther) ayant une viscosité intrinsèque de 0,3 à 0,6 décilitre par gramme, mesurée par un viscosimètre Ubbelohde dans le chloroforme à 25 °C ;
le copolymère à blocs hydrogénés comprend 25 à 35 pour cent en poids d'un copolymère à blocs à gradient

de composition polystyrène-poly(éthylène-butylène-styrène)-polystyrène ;
l'ester organophosphate comprend un ester organophosphate ayant la structure (1)

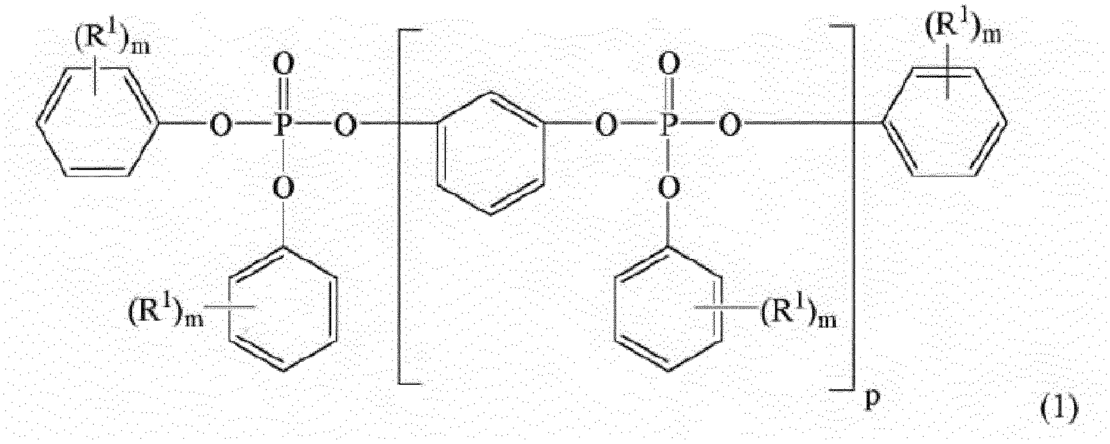

(1)

dans laquelle m représente 2, p représente en moyenne 1 à 2, et $R^1$ représente un méthyle ; un ester organophosphate ayant la structure (2)

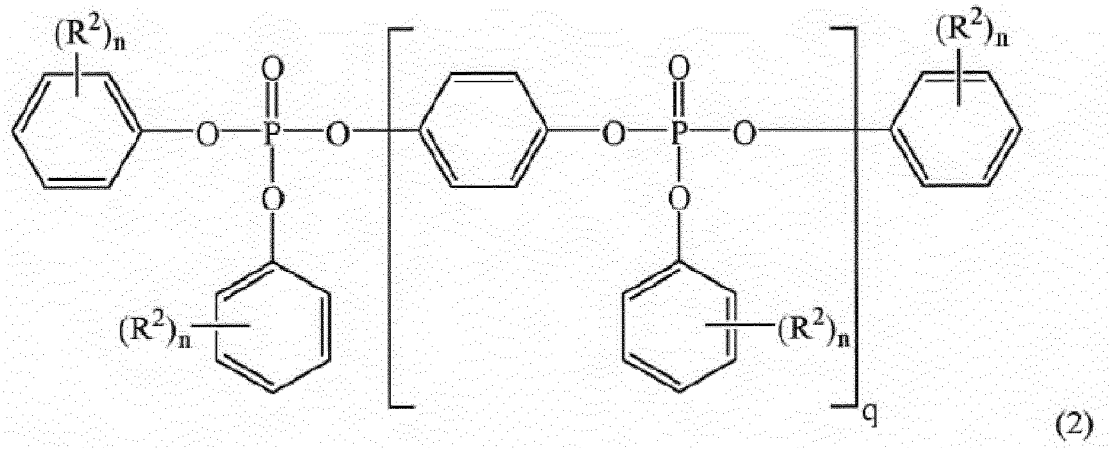

(2)

dans laquelle n représente 0, et q représente en moyenne 1 à 2 ; ou une combinaison de l'ester organophosphate ayant la structure (1) et de l'ester organophosphate ayant la structure (2) ;
l'agent absorbant les ultraviolets comprend un 2-(2'-hydroxyphényl)benzotriazole, une 2-(2'-hydroxyphényl)-1,3,5-triazine ou une combinaison de ceux-ci ;
la composition comprend

18 à 30 parties en poids du poly(phénylène éther),
25 à 40 parties en poids du copolymère à blocs hydrogénés,
3 à 10 parties en poids de l'ester organophosphate, et
1 à 3 parties en poids de l'agent absorbant les ultraviolets ;

la composition comprend en outre

5 à 15 parties en poids d'un homopolymère du propylène, et
6 à 10 parties en poids d'un polybutène ayant une masse moléculaire moyenne en nombre de 500 à 1 500 grammes/mole ; et

le retardateur de flamme comprend en outre

5 à 12 parties en poids d'un dialkylphosphinate métallique et

5 à 12 parties en poids d'un polyphosphate de mélamine.

**14.** Câble gainé, comprenant :

un conducteur ;
une enveloppe isolante entourant le conducteur ; et
une gaine entourant l'enveloppe isolante ;
dans lequel la gaine comprend une composition comprenant

15 à 40 parties en poids d'un poly(phénylène éther) ;
20 à 50 parties en poids d'un copolymère à blocs hydrogénés d'un monomère alcénylaromatique et d'un diène conjugué ;
5 à 30 parties en poids d'un retardateur de flamme contenant 3 à 15 parties en poids d'un ester organophosphate ayant un point de fusion de 60 à 150 °C ; et
0,5 à 5 parties en poids d'un agent absorbant les ultraviolets ;
dans laquelle toutes les parties en poids sont rapportées à 100 parties en poids du total des polymères et des retardateurs de flamme.

**15.** Câble gainé selon la revendication 14, dans lequel

le poly(phénylène éther) comprend un poly(2,6-diméthyl-1,4-phénylène éther) ayant une viscosité intrinsèque de 0,3 à 0,6 décilitre par gramme, mesurée par un viscosimètre Ubbelohde dans le chloroforme à 25 °C ;
le copolymère à blocs hydrogénés comprend 25 à 35 pour cent en poids d'un copolymère à blocs à gradient de composition polystyrène-poly(éthylène-butylène-styrène)-polystyrène ;
l'ester organophosphate comprend un ester organophosphate ayant la structure (1)

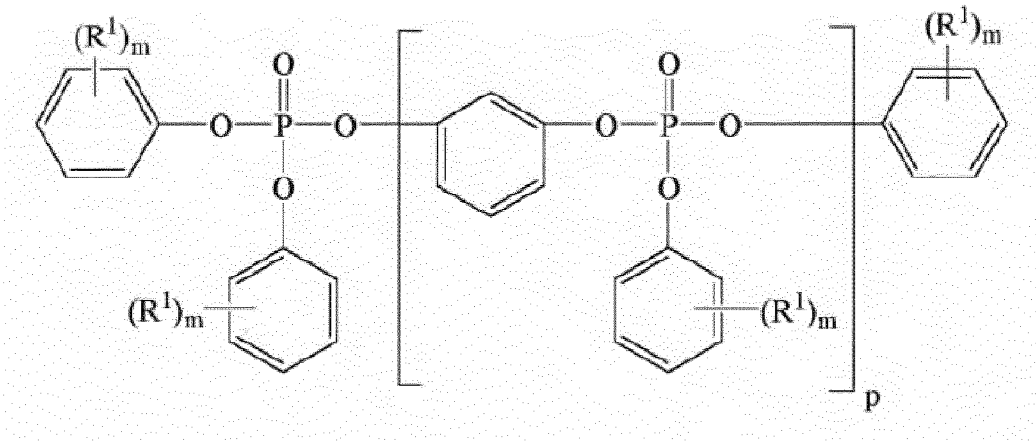

(1)

dans laquelle m représente 2, p représente en moyenne 1 à 2, et $R^1$ représente un méthyle ; un ester organophosphate ayant la structure (2)

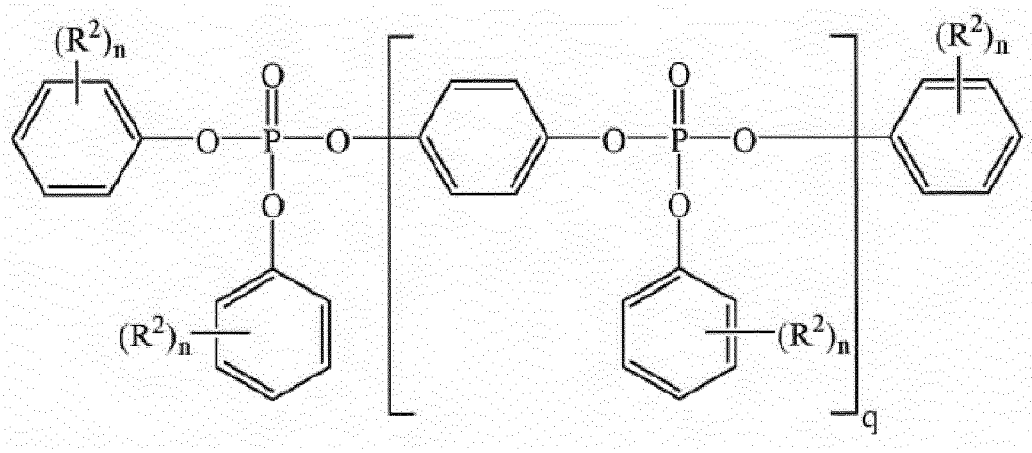

(2)

dans laquelle n représente 0, et q représente en moyenne 1 à 2 ; ou une combinaison de l'ester organophosphate ayant la structure (1) et de l'ester organophosphate ayant la structure (2) ;
l'agent absorbant les ultraviolets comprend un 2-(2'-hydroxyphényl)benzotriazole, une 2-(2'-hydroxyphényl)-1,3,5-triazine ou une combinaison de ceux-ci ;
la composition comprend

18 à 30 parties en poids du poly(phénylène éther),
25 à 40 parties en poids du copolymère à blocs hydrogénés,
3 à 10 parties en poids de l'ester organophosphate, et
1 à 3 parties en poids de l'agent absorbant les ultraviolets ;

la composition comprend en outre

5 à 15 parties en poids d'un homopolymère du propylène, et
6 à 10 parties en poids d'un polybutène ayant une masse moléculaire moyenne en nombre de 500 à 1 500 grammes/mole ; et

le retardateur de flamme comprend en outre

5 à 12 parties en poids d'un dialkylphosphinate métallique et
5 à 12 parties en poids d'un polyphosphate de mélamine.

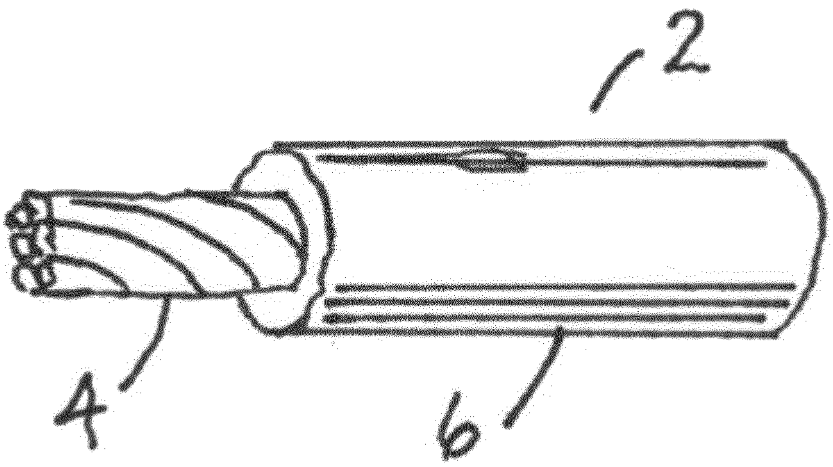


FIG. 1

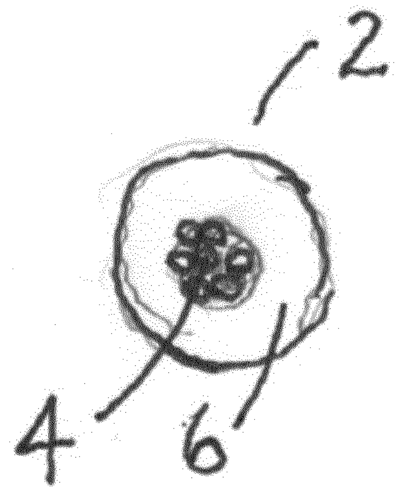


FIG. 2

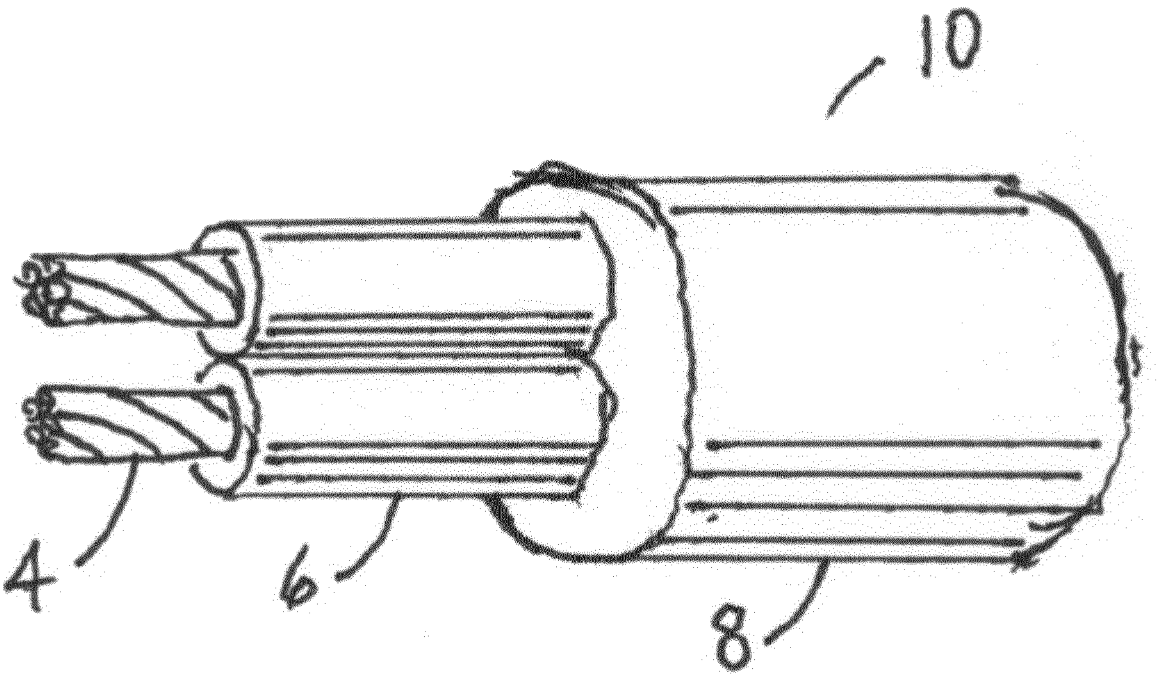


FIG. 3

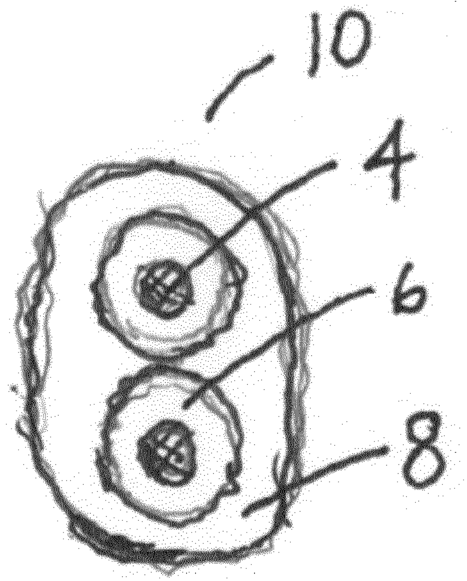


FIG. 4

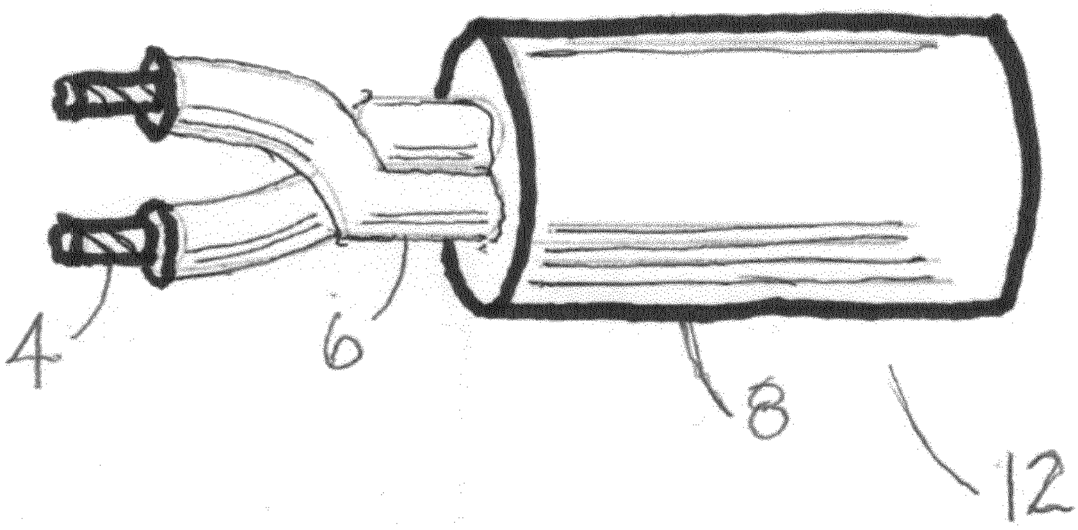


FIG. 5

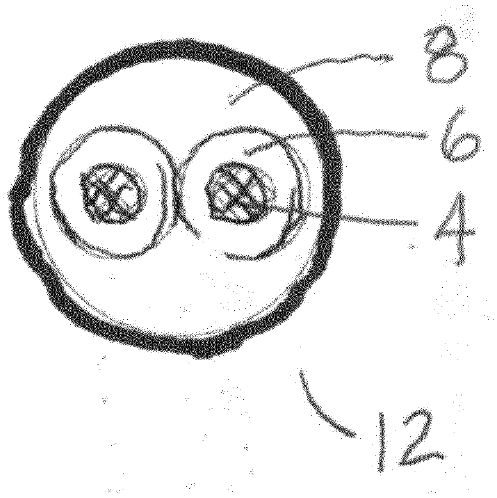


FIG. 6

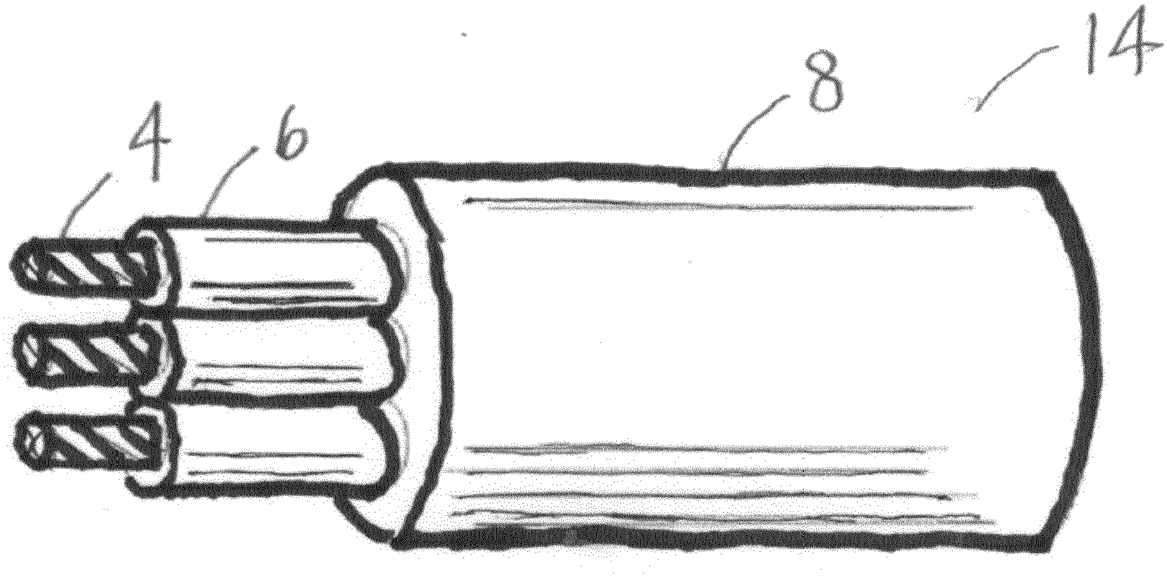


FIG. 7

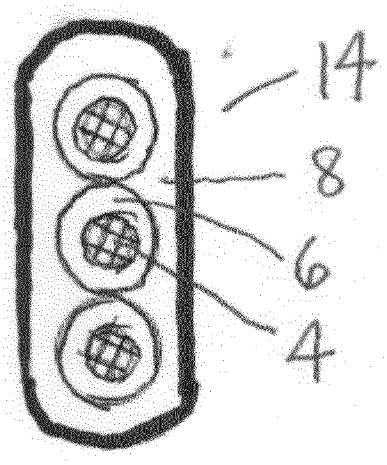


FIG. 8

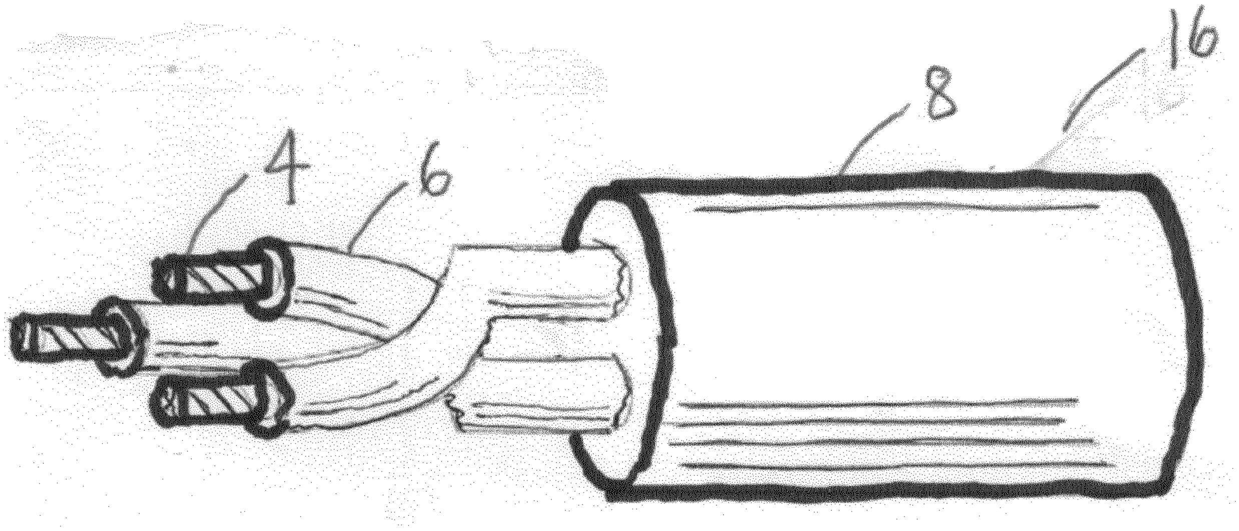


FIG. 9

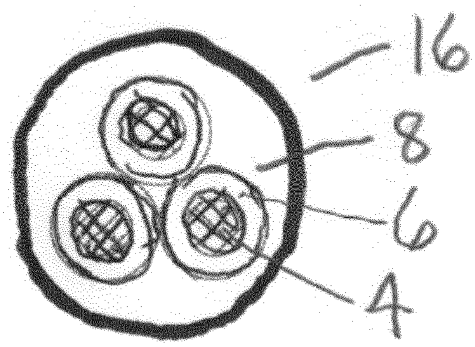


FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013121363 A
- US 2015252214 A
- US 8017697 B
- US 8669332 B
- US 6025419 A, Kasowski
- US 6015510 A, Jacobson


### Non-patent literature cited in the description


- *CHEMICAL ABSTRACTS,* 20208-95-1
- *CHEMICAL ABSTRACTS,* 15541 60-3
- *CHEMICAL ABSTRACTS,* 56386-64-2
- *CHEMICAL ABSTRACTS,* 1309-42-8
- *CHEMICAL ABSTRACTS,* 21645-51-2
- *CHEMICAL ABSTRACTS,* 21041-93-0
- Plastics Additive Handbook. Hanser Gardner Publications, Inc, 2001, 206-238
- *CHEMICAL ABSTRACTS,* 3147-75-9
- *CHEMICAL ABSTRACTS,* 24938-67-8
- *CHEMICAL ABSTRACTS,* 66070-58-4
- *CHEMICAL ABSTRACTS,* 68648-89-5
- *CHEMICAL ABSTRACTS,* 9003-07-0
- *CHEMICAL ABSTRACTS,* 9010-79-1
- *CHEMICAL ABSTRACTS,* 72623-83-7
- *CHEMICAL ABSTRACTS,* 471-34-1
- *CHEMICAL ABSTRACTS,* 9003-27-4